# EUROPEAN PATENT APPLICATION

(11) **EP 3 757 858 A1**
(43) Date of publication of application: **30.12.2020**
(21) Application number: 20181907.5
(22) Date of filing: 24.06.2020
(51) Int. Cl.: G06F 21/78, G06F 21/60, H04L 9/06, G06F 12/02, H04L 9/08, G06F 12/14, H04L 9/32

(54) **MEMORY WRITE FOR OWNERSHIP ACCESS IN A CORE**

(30) Priority: 29.06.2019 US 201962868884 P; 20.12.2019 US 201916722707; 20.12.2019 US 201916722342; 20.12.2019 US 201916723977; 20.12.2019 US 201916724059; 20.12.2019 US 201916723468; 20.12.2019 US 201916724105; 20.12.2019 US 201916723927; 20.12.2019 US 201916723871; 20.12.2019 US 201916724026; 10.01.2020 US 202016740359; 29.04.2020 US 202016862022
(71) Applicant: Intel Corporation, Santa Clara, CA 95054 (US)
(72) Inventor: GHOSH, Santosh, Hillsboro, OR Oregon 97124 (US); LEMAY, Michael, Hilsboro, OR Oregon 97123 (US); DEUTSCH, Sergej, Hillsboro, OR Oregon 97123 (US); DURHAM, David M, Beaverton, OR Oregon 97007 (US); KOUNAVIS, Michael, Portland, OR Oregon 97229 (US)
(74) Representative: Maiwald Patent- und Rechtsanwaltsgesellschaft mbH

(57) **Abstract**

Technologies disclosed herein provide cryptographic computing with memory write access in the core. An example method comprises executing a first instruction of a software entity. The first instruction comprises a first operand comprising a certificate for a memory region in memory. Executing the first instruction includes computing encrypted first data based, at least in part, on a cryptographic algorithm and a first data parameter, determining whether the certificate authorizes the software entity to access the memory region of the memory, and based on determining the certificate in the first operand authorizes the software entity to access the memory region, performing a write operation to store the encrypted first data in the memory region. More specific embodiments include performing the write operation without performing a preceding read operation on the memory region, which may be called a write for ownership.

## Description

### CROSS REFERENCE TO RELATED APPLICATIONS

This application is a continuation-in-part of (and claims the benefit of and priority to) U.S. Patent Application Serial No. 16/740,359 filed January 10, 2020, which application is a continuation-in-part of (and claims the benefit of and priority to) Patent Application Serial Nos. 16/724,059, filed December 20, 2019 and 16/723,468, filed December 20, 2019, and U.S. Patent Application Serial No. 16/740,359, filed January 10, 2020, is also a continuation-in-part of (and claims the benefit of and priority to) U.S. Patent Application Serial Nos. 16/724,105 filed December 20, 2019, 16/724,026 filed December 20, 2019, 16/723,977 filed December 20, 2019, 16/723,927 filed December 20, 2019, 16/723,871 filed December 20, 2019, 16/722,707 filed December 20, 2019, and 16/722,342 filed December 20, 2019, all seven of which claim the benefit of and priority to U.S. Provisional Application No. 62/868,884 filed June 29, 2019. This application is also a continuation-in-part of (and claims the benefit of and priority to) U.S. Patent Application Serial Nos. 16/723,977, 16/722,342, and 16/722,707, each filed December 20, 2019, and all three of which claim the benefit of and priority to U.S. Provisional Application No. 62/868,884 filed June 29, 2019. This application also claims the benefit of and priority to U.S. Provisional Application No. 62/868,884 filed 06/29/2019. The disclosures of the prior applications are considered part of, and are hereby incorporated by reference in their entireties, in the disclosure of this application.

### TECHNICAL FIELD

This disclosure relates in general to the field of computer systems, more particularly, to memory write access in a core.

### BACKGROUND

Protecting memory in computer systems from software bugs and security vulnerabilities is a significant concern. A buffer overflow, which can affect memory safety, occurs when a program writes data to a buffer and overruns a boundary of the buffer such that adjacent memory locations are overwritten. Similarly, reading past the end of a buffer into another page may trigger an access violation or fault. Another memory safety violation is referred to as a dangling pointer. A dangling pointer is a reference that is not resolved to a valid destination. This may occur when memory is deallocated without modifying the value of an existing pointer to the deallocated (or freed) memory. If the system reallocates the freed memory and the dangling pointer is used to access the reallocated memory, unpredictable behavior, including system failure, may occur. Data integrity verification mechanisms, such as embedding message authentication codes (MAC) in cachelines, may be used to complement other data protection techniques. Such integrity verification mechanisms, however, enable reactive detection of stored data that has been corrupted. Thus, different approaches are needed to proactively protect memory from corruption.

### BRIEF DESCRIPTION OF THE DRAWINGS

To provide a more complete understanding of the present disclosure and features and advantages thereof, reference is made to the following description, taken in conjunction with the accompanying figures, where like reference numerals represent like parts, in which:
FIGURE 1 is a simplified block diagram of an example computing device according to at least one embodiment;
FIGURE 2A is flow diagram illustrating a process of binding a generalized encoded pointer to encryption of data referenced by that pointer according to at least one embodiment;
FIGURE 2B is flow diagram illustrating a process of decrypting data bound to a generalized encoded pointer according to at least one embodiment;
FIGURE 3 a block diagram illustrating a flow of cryptographically isolated data or code according to at least one embodiment;
FIGURE 4A is a simplified block diagram illustrating a memory region according to an embodiment;
FIGURE 4B is a simplified block diagram illustrating a memory region with multiple subregions according to an embodiment;
FIGURE 5 is a simplified block diagram illustrating a possible format of a write for ownership certificate that may be used in an example instruction to write data or code to memory according to an embodiment;
FIGURE 6 is a simplified flow diagram illustrating one scenario of writing data or code to memory according to an embodiment;
FIGURE 7 is a simplified flow diagram illustrating other possible operations that may be performed by executing a write for ownership instruction according to an embodiment;
FIGURE 8 is a simplified flow diagram illustrating other possible operations that may be performed by executing a regular write instruction according to an embodiment;
FIGURE 9 is a simplified flow diagram illustrating other possible operations that may be performed to generate a child write for ownership certificate according to an embodiment;
FIGURE 10 is a simplified flow diagram illustrating other possible operations that may be performed by executing an alternative write for ownership instruction according to an embodiment;
FIGURE 11 is a block diagram illustrating an example cryptographic computing environment according to at least one embodiment;
FIGURE 12 is a block diagram illustrating an example processor core and memory according to at least one embodiment;
FIGURES 13A is a block diagram illustrating both an exemplary in-order pipeline and an exemplary register renaming, out-of-order issue/execution pipeline in accordance with certain embodiments;
FIGURE 13B is a block diagram illustrating both an exemplary embodiment of an in-order architecture core and an exemplary register renaming, out-of-order issue/execution architecture core to be included in a processor in accordance with certain embodiments; and
FIGURE 14 is a block diagram of an example computer architecture according to at least one embodiment.

### DETAILED DESCRIPTION

The following disclosure provides various possible embodiments, or examples, for implementations of memory write instructions that may be used in the context of cryptographic computing. Generally, cryptographic computing may refer to computer system security solutions that employ cryptographic mechanisms inside processor components as part of its computation. Some cryptographic computing systems may involve the encryption and decryption of pointer addresses (or a portion of pointers), keys, data, and code in a processor core using new encrypted memory access instructions. Thus, the microarchitecture pipeline of the processor core may be configured in such a way to support such encryption and decryption operations.

Embodiments disclosed in this application are related to proactively blocking out-of-bound accesses to memory while enforcing cryptographic isolation of memory regions within the memory. As used herein, the term 'cryptographic isolation' is intended to mean isolation resulting from different regions or areas of memory being encrypted with one or more different parameters. Parameters can include keys and/or tweaks. Isolated memory regions can be composed of data structures and/or code of a software entity (e.g., virtual machines (VMs), applications, functions, threads). Thus, isolation can be supported at arbitrary levels of granularity such as, for example, isolation between virtual machines, isolation between applications, isolation between functions, isolation between threads, or isolation between data structures (e.g., few byte structures).

In order to enforce separation via encryption while proactively blocking out-of-bound accesses, embodiments disclosed herein assist memory accesses (e.g., read access, write access) that encrypt and decrypt data in a core of a processor using one or more parameters specific to particular memory regions. In one or more embodiments, encrypted memory write operations include both regular write operations and write for ownership (WFO) operations, which have corresponding instructions. A regular write instruction causes a write operation to be preceded by a corresponding memory read operation on the same address (e.g., using the same encoded pointer). If the read fails, then the write access may be blocked. A write for ownership (WFO) instruction passes a valid certificate of ownership associated with the accessed address to prove the software entity is authorized to perform a memory write. Without a valid certificate, the write access may be blocked. WFO instructions may be used to initialize memory for subsequent use by a software entity that includes regular write instructions.

Encryption and decryption operations of data or code associated with a particular memory region may be performed by a cryptographic algorithm using a key associated with that memory region. In at least some embodiments, the cryptographic algorithm may also (or alternatively) use a tweak as input. Generally, parameters such as 'keys' and 'tweaks' are intended to denote input values, which may be secret and/or unique, and which are used by an encryption or decryption process to produce an encrypted output value or decrypted output value, respectively. A key may be a unique value, at least among the memory regions or subregions being cryptographically isolated. Keys may be maintained in either processor registers or new processor memory (e.g., processor cache, content addressable memory (CAM), etc.) that is accessible through new instruction set extensions. A tweak can be derived from an encoded pointer to the memory address where data or code being encrypted/decrypted is stored or to be stored and, in at least some scenarios, can also include context information associated with the memory region.

At least some embodiments disclosed in this specification, including the read and write operations, are related to pointer based data encryption and decryption in which a pointer to a memory location for data or code is encoded with a tag and/or other metadata and may be used to derive at least a portion of tweak input to data or code cryptographic (e.g., encryption and decryption) algorithms. Thus, a cryptographic binding can be created between the cryptographic addressing layer and data/code encryption and decryption. This implicitly enforces bounds since a pointer that strays beyond the end of an object (e.g., data) is likely to use an incorrect tag value for that adjacent object. In one or more embodiments, a pointer is encoded with a linear address (also referred to herein as "memory address") to a memory location and metadata. In some pointer encodings, a slice or segment of the address in the pointer includes a plurality of bits and is encrypted (and decrypted) based on a secret address key and a tweak that includes the metadata. Other pointers can be encoded with a plaintext memory address (linear address) and metadata.

For purposes of illustrating the several embodiments for proactively blocking out-of-bound memory accesses while enforcing cryptographic isolation of memory regions, it is important to first understand the operations and activities associated with data protection and memory safety. Accordingly, the following foundational information may be viewed as a basis from which the present disclosure may be properly explained.

Known computing techniques (e.g., page tables for process/kernel separation, virtual machine managers, managed runtimes, etc.) have used architecture and metadata to provide data protection and isolation. For example, in previous solutions, memory controllers outside the CPU boundary support memory encryption and decryption at a coarser granularity (e.g., applications), and isolation of the encrypted data is realized via access control. Typically, a cryptographic engine is placed in a memory controller, which is outside a CPU core. In order to be encrypted, data travels from the core to the memory controller with some identification of which keys should be used for the encryption. This identification is communicated via bits in the physical address. Thus, any deviation to provide additional keys or tweaks could result in increased expense (e.g., for new buses) or additional bits being "stolen" from the address bus to allow additional indexes or identifications for keys or tweaks to be carried with the physical address. Access control can require the use of metadata and a processor would use lookup tables to encode policy or data about the data for ownership, memory size, location, type, version, etc. Dynamically storing and loading metadata requires additional storage (memory overhead) and impacts performance, particularly for fine grain metadata (such as function as a service (FaaS) workloads or object bounds information).

Cryptographic isolation of memory compartments (also referred to herein as 'memory regions'), resolves many of the aforementioned issues (and more). Cryptographic isolation may make redundant the legacy modes of process separation, user space, and kernel with a fundamentally new fine-grain protection model. With cryptographic isolation of memory compartments, protections are cryptographic, with processors and accelerators alike utilizing secret keys (and optionally tweaks) and ciphers to provide access control and separation at increasingly finer granularities. Indeed, isolation can be supported for memory compartments as small as a one-byte object to as large as data and code for an entire virtual machine. In at least some scenarios, cryptographic isolation may result in individual applications or functions becoming the boundary, allowing address spaces to be shared via pointers. These pointers can be cryptographically encoded or non-cryptographically encoded. Furthermore, in one or more embodiments, encryption and decryption happens inside the processor core, within the core boundary. Because encryption happens before data is written to a memory unit outside the core, such as the L1 cache or main memory, it is not necessary to "steal" bits from the physical address to convey key or tweak information, and an arbitrarily large number of keys and/or tweaks can be supported. Also, costs of the microarchitecture pipeline are minimized since the operations happen within the core.

Cryptographic isolation leverages the concept of a cryptographic addressing layer where the processor encrypts at least a portion of software allocated memory addresses (linear/virtual address space, also referred to as "pointers") based on implicit and/or explicit metadata (e.g., context information) and/or a slice of the memory address itself (e.g., as a tweak to a tweakable block cipher (e.g., XOR-encrypt-XOR-based tweaked-codebook mode with ciphertext stealing (XTS)). As used herein, a "tweak" may refer to, among other things, an extra input to a block cipher, in addition to the usual plaintext or ciphertext input and the key. A tweak comprises one or more bits that represent a value. In one or more embodiments, a tweak may compose all or part of an initialization vector (IV) for a block cipher. A resulting cryptographically encoded pointer can comprise an encrypted portion (or slice) of the memory address and some bits of encoded metadata (e.g., context information). When decryption of an address is performed, if the information used to create the tweak (e.g., implicit and/or explicit metadata, plaintext address slice of the memory address, etc.) corresponds to the original allocation of the memory address by a memory allocator (e.g., software allocation method), then the processor can correctly decrypt the address. Otherwise, a random address result will cause a fault and get caught by the processor.

These cryptographically encoded pointers (or portions thereof) may be further used by the processor as a tweak to the data encryption cipher used to encrypt/decrypt data they refer to (data referenced by the cryptographically encoded pointer), creating a cryptographic binding between the cryptographic addressing layer and data/code encryption. In some embodiments, the cryptographically encoded pointer may be decrypted and decoded to obtain the linear address. The linear address (or a portion thereof) may be used by the processor as a tweak to the data encryption cipher. Alternatively, in some embodiments, the memory address may not be encrypted but the pointer may still be encoded with some metadata representing a unique value among pointers. In this embodiment, the encoded pointer (or a portion thereof) may be used by the processor as a tweak to the data encryption cipher. It should be noted that a tweak that is used as input to a block cipher to encrypt/decrypt a memory address is also referred to herein as an "address tweak". Similarly, a tweak that is used as input to a block cipher to encrypt/decrypt data is also referred to herein as a "data tweak".

Although the cryptographically encoded pointer (or non-cryptographically encoded pointers) can be used to isolate data, via encryption, the integrity of the data may still be vulnerable. For example, unauthorized access of cryptographically isolated data can corrupt the memory region where the data is stored regardless of whether the data is encrypted, corrupting the data contents unbeknownst to the victim. Data integrity may be supported using an integrity verification (or checking) mechanism such as message authentication codes (MACs) or implicitly based on an entropy measure of the decrypted data, or both. MAC codes may be stored per cacheline and evaluated each time the cacheline is read to determine whether the data has been corrupted. Such mechanisms, however, do not proactively detect unauthorized memory accesses. Instead, corruption of memory (e.g., out-of-bounds access) is detected in a reactive manner (e.g., after the data is written) rather than a proactive manner (e.g., before the data is written). For example, memory corruption may occur by a write operation performed at a memory location that is out-of-bounds for the software entity. With cryptographic computing, the write operation may use a key and/or a tweak that is invalid for the memory location. When a subsequent read operation is performed at that memory location, the read operation may use a different key on the corrupted memory and detect the corruption. For example, if the read operation uses the valid key and/or tweak), then the retrieved data will not decrypt properly and the corruption can be detected using a message authentication code, for example, or by detecting a high level of entropy (randomness) in the decrypted data (implicit integrity).

One option for proactively blocking out-of-bounds accesses involves embedding information related to the object bounds and/or memory region bounds in various locations. For example, such information can be embedded in the description of objects, pointers to the objects, metadata tables, etc. Such approaches require significant overhead to store the information in memory and retrieve the information each time a memory access is performed. Thus, more efficient approaches are needed in cryptographic computing to proactively block out-of-bounds memory accesses.

Embodiments disclosed herein resolve many of the aforementioned issues (and more). One or more embodiments enforce separation via encryption while still proactively blocking out-of-bound accesses. This can be achieved with distinguishable write operations, including regular write operations and write for ownership (WFO) operations, including corresponding instructions. Regular write operations are preceded by a corresponding memory read operation on the same memory address (e.g., using the same encoded pointer). To decrypt data that is read, the preceding read operation uses the same parameter (e.g., key and/or tweak) of the regular write operation. If no corruption is detected during the read operation, then the regular write operation proceeds as normal and completes. If some corruption is detected, then the write operation is blocked. Corruption may be detected, for example, when an out-of-bounds access uses a key and/or tweak other than the correct key and/or tweak that encrypted the accessed data. In contrast, a write for ownership (WFO) instruction may pass a valid certificate of ownership associated with the accessed address to assert its authorization to access the memory. If the certificate is valid, then the write operation proceeds without any preceding read as in the case of a regular write access. If the certificate is not valid, however, then the write access is blocked. In some embodiments, no certificate is required, instead using a direct write (e.g. a non-temporal store) operation that is not preceded by a read operation, where none of the prior memory contents are revealed before the write operation overwrites the previous data preserving the secrets. This is an implicit change of memory ownership. In these cases, if the overwritten data is again accessed by the previous owner whose data was overwritten, the integrity checks will fail (e.g. MAC values will not match) causing an error and preventing the consumption of corrupted data.

A write for ownership operation can be used to change the contents of memory from using one keystream to using another keystream, and this may be a privileged operation (e.g., performed by a memory manager, or determined by the permissions used with operations to decrypt an encoded pointer) to allocate memory without causing integrity violations. The write for ownership may change the data (or code) and corresponding integrity values (e.g., ICVs/MACs) to match the written data contents with the new keystream/tweak. Meanwhile, regular writes may first read the old data/integrity values from memory using the encoded address being used to store (write) the register contents to memory to first verify that the correct keystream/tweaks are being used (e.g., a read for ownership check). In this way, attempts to overwrite memory belonging to someone else (different key/tweak) is detected and prevented. Thus, out-of-bounds memory accesses can be proactively blocked rather than reactively blocked. Such error detection can prevent valuable resources from being consumed and can enable quicker resolutions of problematic code. In addition, the use of WFO instructions combined with regular write instructions enables more efficient error detection than storing and retrieving from memory information that indicates memory region bounds and object bounds for every access. Thus, embodiments described herein can improve speed and efficiency of error detection.

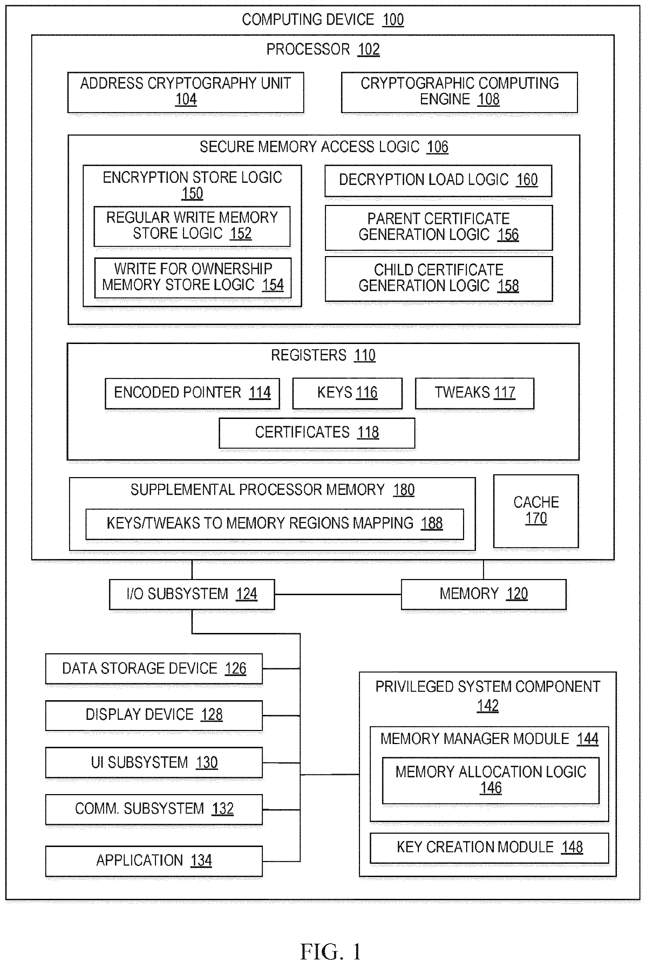

Turning to FIGURE 1, FIGURE 1 is a simplified block diagram of an example computing device 100 for implementing a proactive blocking technique for out-of-bound accesses to memory while enforcing cryptographic isolation of memory regions using secure memory access logic according to at least one embodiment of the present disclosure. In the example shown, the computing device 100 includes a processor 102 with an address cryptography unit 104, a cryptographic computing engine 108, secure memory access logic 106, and memory components, such as a cache 170 (e.g., L1 cache, L2 cache) and supplemental processor memory 180. Secure memory access logic 106 includes encryption store logic 150 to encrypt data based on various keys and/or tweaks and then store the encrypted data, decryption load logic 160 to read and then decrypt data based on the keys and/or tweaks, parent certificate generation logic 156 to issue certificates to authorize a software entity to use a write for ownership (WFO) instruction to initialize a memory region, and a child certificate generation logic 158 to issue certificates to authorize a software entity to use a WFO instruction to initialize a smaller region within a larger memory region. Cryptographic computing engine 108 may be configured to decrypt data or code for load operations based on various keys and/or tweaks and to encrypt data or code for store operations based on various keys and/or tweaks. Address cryptography unit 104 may be configured to decrypt and encrypt a linear address (or a portion of the linear address) encoded in a pointer to the data or code referenced by the linear address.

Processor 102 also includes registers 110, which may include e.g., general purpose registers and special purpose registers (e.g., control registers, model-specific registers (MSRs), etc.). Registers 110 may contain various data that may be used in one or more embodiments, such as an encoded pointer 114 to a memory address. The encoded pointer may be cryptographically encoded or non-cryptographically encoded. An encoded pointer is encoded with some metadata. If the encoded pointer is cryptographically encoded, at least a portion (or slice) of the address bits is encrypted. In some embodiments, keys 116 used for encryption and decryption of addresses, code, and/or data may be stored in registers 110. In some embodiments, tweaks 117 used for encryption and decryption of addresses, code, and/or data may be store in registers 110. Additionally, certificates 118 generated for validating write for ownership instructions may be stored in registers 110.

The secure memory access logic 106 utilizes metadata about encoded pointer 114, which is encoded into unused bits of the encoded pointer 114 (e.g., non-canonical bits of a 64-bit address, or a range of addresses set aside, e.g., by the operating system, such that the corresponding high order bits of the address range may be used to store the metadata), in order to secure and/or provide access control to memory locations pointed to by the encoded pointer 114. For example, the metadata encoding and decoding provided by the secure memory access logic 106 can prevent the encoded pointer 114 from being manipulated to cause a buffer overflow, and/or can prevent program code from accessing memory that it does not have permission to access. Pointers may be encoded when memory is allocated (e.g., by an operating system, in the heap) and provided to executing programs in any of a number of different ways, including by using a function such as malloc, alloc, or new; or implicitly via the loader, or statically allocating memory by the compiler, etc. As a result, the encoded pointer 114, which points to the allocated memory, is encoded with the address metadata.

The address metadata can include valid range metadata. The valid range metadata allows executing programs to manipulate the value of the encoded pointer 114 within a valid range, but will corrupt the encoded pointer 114 if the memory is accessed using the encoded pointer 114 beyond the valid range. Alternatively or in addition, the valid range metadata can be used to identify a valid code range, e.g., a range of memory that program code is permitted to access (e.g. the encoded range information can be used to set explicit ranges on registers). Other information that can be encoded in the address metadata includes access (or permission) restrictions on the encoded pointer 114 (e.g., whether the encoded pointer 114 can be used to write, execute, or read the referenced memory).

In at least some other embodiments, other metadata (or context information) can be encoded in the unused bits of encoded pointer 114 such as a size of plaintext address slices (e.g., number of bits in a plaintext slice of a memory address embedded in the encoded pointer), a memory allocation size (e.g., bytes of allocated memory referenced by the encoded pointer), a type of the data or code (e.g., class of data or code defined by programming language), permissions (e.g., read, write, and execute permissions of the encoded pointer), a location of the data or code (e.g., where the data or code is stored), the memory location where the pointer itself is to be stored, an ownership of the data or code, a version of the encoded pointer (e.g., a sequential number that is incremented each time an encoded pointer is created for newly allocated memory, determines current ownership of the referenced allocated memory in time), a tag of randomized bits (e.g., generated for association with the encoded pointer), a privilege level (e.g., user or supervisor), a cryptographic context identifier (or crypto context ID) (e.g., randomized or deterministically unique value for each encoded pointer), etc. For example, in one embodiment, the address metadata can include size metadata that encodes the size of a plaintext address slice in the encoded pointer. The size metadata may specify a number of lowest order bits in the encoded pointer that can be modified by the executing program. The size metadata is dependent on the amount of memory requested by a program. Accordingly, if 16 bytes are requested, then size metadata is encoded as 4 (or 00100 in five upper bits of the pointer) and the 4 lowest bits of the pointer are designated as modifiable bits to allow addressing to the requested 16 bytes of memory. In some embodiments, the address metadata may include a tag of randomized bits associated with the encoded pointer to make the tag unpredictable for an adversary. An adversary may try to guess the tag value so that the adversary is able to access the memory referenced by the pointer, and randomizing the tag value may make it less likely that the adversary will successfully guess the value compared to a deterministic approach for generating a version value. In some embodiments, the pointer may include a version number (or other deterministically different value) determining current ownership of the referenced allocated data in time instead of or in addition to a randomized tag value. Even if an adversary is able to guess the current tag value or version number for a region of memory, e.g., because the algorithm for generating the version numbers is predictable, the adversary may still be unable to correctly generate the corresponding encrypted portion of the pointer due to the adversary not having access to the key that will later be used to decrypt that portion of the pointer.

The example secure memory access logic 106 is embodied as part of processor instructions (e.g., as part of the processor instruction set architecture), or microcode (e.g., instructions that are stored in read-only memory and executed directly by the processor 102). In other embodiments, portions of the secure memory access logic 106 may be embodied as hardware, firmware, software, or a combination thereof (e.g., as programming code executed by a privileged system component 142 of the computing device 100). In one example, decryption load logic 160 and encryption store logic 150 are embodied as part of new load (read) and store (write) processor instructions that perform respective decryption and encryption operations to isolate memory compartments. Decryption load logic 160 and encryption store logic 150 verify encoded metadata on memory read and write operations that utilize the new processor instructions (e.g., which may be counterparts to existing processor instructions such as MOV), where a general purpose register is used as a memory address to read a value from memory (e.g., load) or to write a value to memory (e.g., store). One or more embodiments disclosed in this specification include new memory write for ownership instructions and regular write instructions, which are further described herein.

The secure memory access logic 106 is executable by the computing device 100 to provide security for encoded pointers "inline," e.g., during execution of a program (such as a user space application 134) by the computing device 100. As used herein, the terms "indirect address" and "pointer" may each refer to, among other things, an address (e.g. virtual address or linear address) of a memory location at which other data or instructions are stored. In an example, a register that stores an encoded memory address of a memory location where data or code is stored may act as a pointer. As such, the encoded pointer 114 may be embodied as, for example, a data pointer (which refers to a location of data), a code pointer (which refers to a location of executable code), an instruction pointer, or a stack pointer. As used herein, "context information" includes "metadata" and may refer to, among other things, information about or relating to an encoded pointer 114, such as a valid data range, a valid code range, pointer access permissions, a size of plaintext address slice (e.g., encoded as a power in bits), a memory allocation size, a type of the data or code, a location of the data or code, an ownership of the data or code, a version of the pointer, a tag of randomized bits, version, a privilege level of software, a cryptographic context identifier, etc.

As used herein, "memory access instruction" may refer to, among other things, a "MOV" or "LOAD" instruction or any other instruction that causes data to be read, copied, or otherwise accessed at one storage location, e.g., memory, and moved into another storage location, e.g., registers (where "memory" may refer to main memory or cache, e.g., a form of random access memory, and "register" may refer to a processor register, e.g., hardware), or any instruction that accesses or manipulates memory. Also as used herein, "memory access instruction" may refer to, among other things, a "MOV" or "STORE" instruction or any other instruction that causes data to be read, copied, or otherwise accessed at one storage location, e.g., register, and moved into another storage location, e.g., memory, or any instruction that accesses or manipulates memory. Memory access instructions to perform encryption of data or code within the core and store the encrypted data or code, and to proactively block out-of-bound accesses (e.g., Write for Ownership (WFO) instruction, regular write instructions) will be further described herein. Some embodiments may define instructions that write/store special ciphertext values to memory in place of the data's ciphertext in order to indicate that the memory location is uninitialized. On reading these special ciphertext values, the processor may then generate a fault or exception to indicate to the executing software program that the memory contents are not yet initialized and appropriate initial values may be substituted when loading a processor register. For example, a hash table stored in memory may not have all its entries initialized, when a hash hit is found for an uninitialized hash table entry, the entry can be marked with a special ciphertext value indicating it is not yet initialized, and a software exception can then write/store the corresponding data initializing the entry with the data's ciphertext replacing the uninitialized special value for the corresponding memory location.

The address cryptography unit 104 can include circuitry and logic to perform address decoding of an encoded pointer to obtain a linear address of a memory location of data (or code). The address decoding can include decryption if needed (e.g., if the encoded pointer includes an encrypted portion of a linear address) based at least in part on a key and/or on a tweak derived from the encoded pointer. The address cryptography unit 104 can also include circuitry and logic to perform address encoding of the encoded pointer, including encryption if needed (e.g., the encoded pointer includes an encrypted portion of a linear address), based at least in part on the same key and/or on the same tweak used to decode the encoded pointer. Address encoding may also include storing metadata in the noncanonical bits of the pointer. Various operations such as address encoding and address decoding (including encryption and decryption of the address or portions thereof) may be performed by processor instructions associated with address cryptography unit 104, other processor instructions, or a separate instruction or series of instructions, or a higher-level code executed by a privileged system component such as an operating system kernel or virtual machine monitor, or as an instruction set emulator. As described in more detail below, address encoding logic and address decoding logic each operate on an encoded pointer 114 using metadata (e.g., one or more of valid range, permission metadata, size (power), memory allocation size, type, location, ownership, version, tag value, privilege level (e.g., user or supervisor), crypto context ID, etc.) and a secret key (e.g., keys 116), in order to secure the encoded pointer 114 at the memory allocation/access level.

The encryption store logic 150 and decryption load logic 160 can use cryptographic computing engine 108 to perform cryptographic operations on data to be stored at a memory location referenced by encoded pointer 114 or obtained from a memory location referenced by encoded pointer 114. The cryptographic computing engine 108 can include circuitry and logic to perform data (or code) decryption based at least in part on a tweak derived from an encoded pointer to a memory location of the data (or code), and to perform data (or code) encryption based at least in part on a tweak derived from an encoded pointer to a memory location for the data (or code). The cryptographic operations of the engine 108 may use a tweak, which includes at least a portion of the encoded pointer 114 (or the linear address generated from the encoded pointer) and/or a secret key (e.g., keys 116) in order to secure the data or code at the memory location referenced by the encoded pointer 114 by binding the data/code encryption and decryption to the encoded pointer.

Various different cryptographic algorithms may be used to implement the address cryptography unit 104 and cryptographic computing engine 108. Generally, Advanced Encryption Standard (AES) has been the mainstay for data encryption for decades, using a 128bit block cipher. Meanwhile, memory addressing is typically 64bits today. Although embodiments herein may be illustrated and explained with reference to 64-bit memory addressing for 64 computers, the disclosed embodiments are not intended to be so limited and can easily be adapted to accommodate 32bits, 128bits, or any other available bit sizes for pointers. Likewise, embodiments herein may further be adapted to accommodate various sizes of a block cipher (e.g., 64bit, 48bit, 32 bit, 16bit, etc. using Simon, Speck, tweakable K-cipher, PRINCE or any other block cipher).

Lightweight ciphers suitable for pointer-based encryption have also emerged recently. The PRINCE cipher, for example, can be implemented in 3 clocks requiring as little as 799 µm² of area in the 10nm process, providing half the latency of AES in a tenth the Silicon area. Cryptographic isolation may utilize these new ciphers, as well as others, introducing novel computer architecture concepts including, but not limited to: (i) cryptographic addressing, i.e., the encryption of data pointers at the processor using, as tweaks, contextual information about the referenced data (e.g., metadata embedded in the pointer and/or external metadata), a slice of the address itself, or any suitable combination thereof; and (ii) encryption of the data itself at the core, using cryptographically encoded pointers or portions thereof, non-cryptographically encoded pointers or portion(s) thereof, contextual information about the referenced data, or any suitable combination thereof as tweaks for the data encryption. A variety of encryption modes that are tweakable can be used for this purpose of including metadata (e.g., counter mode (CTR) and XOR-encrypt-XOR (XEX)-based tweaked-codebook mode with ciphertext stealing (XTS)). In addition to encryption providing data confidentiality, its implicit integrity may allow the processor to determine if the data is being properly decrypted using the correct keystream and tweak. In some block cipher encryption modes, the block cipher creates a keystream, which is then combined (e.g., using XOR operation or other more complex logic) with an input block to produce the encrypted or decrypted block. In some block ciphers, the keystream is fed into the next block cipher to perform encryption or decryption.

The example encoded pointer 114 in FIGURE 1 is embodied as a register 110 (e.g., a general purpose register of the processor 102). The example secret keys 116 may be generated by a key creation module 148 of a privileged system component 142, and stored in one of the registers 110 (e.g., a special purpose register or a control register such as a machine specific register (MSR)), another memory location that is readable by the processor 102 (e.g., firmware, a secure portion of a data storage device 126, etc.), in external memory, or another form of memory suitable for performing the functions described herein. In some embodiments, tweaks for encrypting addresses, data, or code may be computed in real time for the encryption or decryption. Tweaks 117 may be stored in registers 110, another memory location that is readable by the processor 102 (e.g., firmware, a secure portion of a data storage device 126, etc.), in external memory, or another form of memory suitable for performing the functions described herein. In some embodiments, the secret keys 116 and/or tweaks 117 are stored in a location that is readable only by the processor, such as supplemental processor memory 180. In at least one embodiment, the supplemental processor memory 180 may be implemented as a new cache or content addressable memory (CAM). In one or more implementations, supplemental processor memory 180 may be used to store information related to cryptographic isolation such as keys and potentially tweaks, credentials, and/or context IDs.

In one or more embodiments, encryption store logic 150 may include regular write memory store logic 152. Regular write memory store logic 152 may be embodied as a regular write instruction to perform a regular memory store of some available data D0. For this type of store, an encrypted memory write operation or micro-operation, which is associated with data D0, a memory address A1, and a data key K1, is issued. Before the write operation is performed, however, a read operation is performed using the same memory address A1. The content that is already stored at the memory address A1 is first read and decrypted using the data key K1. As part of the decryption, an integrity check is performed on the decrypted data. If the decrypted data is determined to be corrupted, this indicates a possible out-of-bound access because the stored content was potentially encrypted with a key other than the data key K1. The use of different keys for encryption and decryption of the contents at the memory address A1 can cause the corruption of the data. If the decrypted contents of memory address A1 are determined to be corrupted, then the write operation may be aborted, and the processor returns an indication of corruption. For example, a processor flag in a register may be set accordingly. If the decrypted contents of memory address A1 are not determined to be corrupted, then the write operation completes and the content of address A1 is replaced by the result of the encryption of available data D0 using data key K1.

In one or more embodiments, encryption store logic 150 may also include write for ownership (WFO) memory store logic 154. WFO memory store logic 154 may be embodied as a WFO instruction to perform a WFO memory store of some available data D0. For this type of store, a WFO memory operation or micro-operation, which is associated with memory address A1 and data key K1, is issued. In contrast to regular write operations, however, there is no preceding read operation from the same memory address A1. The WFO memory operation is used for directly writing into a memory region based on memory address A1, without performing any integrity checks on the contents of the memory region. The WFO memory operation may be used for initializing the memory region with data that is encrypted using data key K1, where data key K1 is associated with the software entity that owns the memory address A1 of the memory region. In at least one embodiment, this is achieved by the software entity executing a WFO instruction that presents a write for ownership certificate as an operand. The certificate is associated with address A1 and is used to prove that the software entity is authorized to perform the WFO access at address A1. If the certificate is proven valid, the content of address A1 is replaced by encrypted data D0.

Although a WFO instruction may be executed by a software entity to initialize a memory region before any regular write instructions are executed for that memory region, WFO instructions may also be used to re-initialize the memory region in some instances. For example, a certificate may be generated for a memory region sized for a smaller object, where the memory region may be re-initialized multiple times during the runtime of the software entity. Additionally, WFO instructions can advantageously mitigate uninitialized use vulnerabilities, where software reads some data out of memory before it has been properly initialized. By using WFO instructions during the runtime of a software entity, when an allocation of a memory region is made, a WFO instruction can be executed as the memory region is being initialized. If a read operation is performed on that memory region allocation before the WFO instruction is executed (e.g., either by a regular read instruction or by a preceding read operation invoked by a regular write instruction), an integrity check violation will occur and thus an uninitialized use vulnerability will be detected before corrupted data is used elsewhere in the software entity.

In one or more embodiments, software utilizes certificates 118 to obtain privileged access to particular memory regions specified by the certificates. For example, a write for ownership instruction allows a software entity (e.g., virtual machine manager (VMM), operating system, application, function, thread, etc.) to initialize a memory region by presenting a certificate to prove that it is authorized to write data (or code) to a particular memory region specified by that certificate. Certificates can be embodied as parent certificates or child certificates, where a parent certificate specifies a memory region having a particular size, and an associated child certificate specifies a smaller memory region (e.g., subregion or first-level subregion) contained within the larger memory region. Additionally, embodiments allow for multiple levels of subregions (e.g., first-level subregion of a parent/main memory region, second-level subregion of a first-level subregion, etc.) and child certificates (e.g., first-level child certificate of a parent certificate, second-level child certificate of a first-level child certificate, etc.) to be used.

Certificates may be generated and signed by processor 102. For example, parent certificate generation logic 156 may be embodied as a parent certificate generation instruction that generates parent certificates. Child certificate generation logic 158 may be embodied as a child certificate generation instruction that generates child certificates. At least some certificates can be granted at boot time of the computing device 100. For example, a parent certificate for memory allocated for larger entities (e.g., virtual memory managers (VMMs), operating systems, etc.) and other entities (e.g., applications) may be granted at boot time by the BIOS. In some scenarios, however, a software entity may request access to a privileged memory region after boot time and the processor 102 provides the appropriate certificate to the application. In these scenarios, the processor may provide some secret information to the software entity at boot time. The software entity may use the secret information in an execute-only mode to authenticate itself to the processor and establish its context. The software entity may use this context information together with the credentials used to establish the context to obtain original certificates for the root of write for ownership memory accesses, before the processor grants rights to child software entities.

Certificates 118 may be stored in registers 110 (e.g., a special purpose register or a control register such as a machine specific register (MSR)), another memory location that is readable by the processor 102 (e.g., firmware, a secure portion of a data storage device 126, etc.), in external memory, or another form of memory suitable for performing the functions described herein. In some embodiments, the certificates 118 are stored in a location that is readable only by the processor, such as supplemental processor memory 180. A certificate may be referenced at instruction invocation time using an instruction that includes an operand that references the certificate (e.g., write for ownership instruction).

It should be noted that embodiments described herein allow for any number of parameters such as secret keys and/or tweaks to be used for a memory region owned by a particular software entity (e.g., virtual machine, operating system, application, function, thread). For example, a key and/or a tweak could be used to isolate a memory region owned by a particular software entity from other memory regions owned by other software entities. Additionally, parameters such as keys and/or tweaks could be used to isolate one or more levels of subregions within a parent (or main) region owned by a software entity. For example, a key and/or a tweak could be used to isolate a first-level subregion within a main memory region owned by the software entity from other first-level subregions within the main memory region. Furthermore, one or more parameters may be used to isolate a second-level subregion from other second-level subregions within a first-level subregion of a main memory region owned by a software entity, and so on. It should be apparent that a different key may be used for each memory region (e.g., main memory region or subregion) to isolate the memory regions from each other. Alternatively, the same key could be used for each memory region, but the key could paired with a different tweak for each instance of a memory region to enforce isolation of the memory region instances. Isolation using tweaks can be achieved in a similar manner for each level of subregions.

In at least one embodiment, a mapping 188 of memory regions (e.g., main memory regions and subregions) to the parameters used to isolate those memory regions may be stored in suitable memory that is readable by the processor 102 (e.g., firmware, a secure portion of a data storage device 126, etc.), in external memory, or another form of memory suitable for performing the functions described herein. In some embodiments, the mapping 188 is stored in a location that is readable only by the processor, such as supplemental processor memory 180.

Secret keys may also be generated and associated with cryptographically encoded pointers for encrypting/decrypting the address portion (or slice) encoded in the pointer. These keys may be the same as or different than the keys associated with the pointer to perform data (or code) encryption/decryption operations on the data (or code) referenced by the cryptographically encoded pointer. For ease of explanation, the terms "secret address key" or "address key" may be used to refer to a secret key used in encryption and decryption operations of memory addresses and the terms "secret data key" or "data key" may be used to refer a secret key used in operations to encrypt and decrypt data or code.

On (or during) a memory allocation operation (e.g., a "malloc"), memory allocation logic 146 allocates a range of memory for a buffer, returns a pointer along with the metadata (e.g., one or more of range, permission metadata, size (power), memory allocation size, type, location, ownership, version, tag, privilege level, crypto context ID, etc.). In one example, the memory allocation logic 146 may encode plaintext range information in the encoded pointer 114 (e.g., in the unused/non-canonical bits, prior to encryption), or supply the metadata as one or more separate parameters to the instruction, where the parameter(s) specify the range, code permission information, size (power), memory allocation size, type, location, ownership, version, tag, privilege level (e.g., user or supervisor), crypto context ID, or some suitable combination thereof. Illustratively, the memory allocation logic 146 may be embodied in a memory manager module 144 of the privileged system component 142. The memory allocation logic 146 causes the pointer 114 to be encoded with the metadata (e.g., range, permission metadata, size (power), memory allocation size, type, location, ownership, version, tag value, privilege level, crypto context ID, some suitable combination thereof, etc.). The metadata may be stored in an unused portion of the encoded pointer 114 (e.g., non-canonical bits of a 64-bit address). For some metadata or combinations of metadata, the pointer 114 may be encoded in a larger address space (e.g., 128-bit address, 256-bit address) to accommodate the size of the metadata or combination of metadata.

To determine valid range metadata, example range rule logic selects the valid range metadata to indicate an upper limit for the size of the buffer referenced by the encoded pointer 114. Address adjustment logic adjusts the valid range metadata as needed so that the upper address bits (e.g., most significant bits) of the addresses in the address range do not change as long as the encoded pointer 114 refers to a memory location that is within the valid range indicated by the range metadata. This enables the encoded pointer 114 to be manipulated (e.g., by software performing arithmetic operations, etc.) but only so long as the manipulations do not cause the encoded pointer 114 to go outside the valid range (e.g., overflow the buffer).

In an embodiment, the valid range metadata is used to select a portion (or slice) of the encoded pointer 114 to be encrypted. In other embodiments, the slice of the encoded pointer 114 to be encrypted may be known a priori (e.g., upper 32 bits, lower 32 bits, etc.). The selected slice of the encoded pointer 114 (and the adjustment, in some embodiments) is encrypted using a secret address key (e.g., keys 116) and optionally, an address tweak, as described further below. On a memory access operation (e.g., a read, write, or execute operation), the previously-encoded pointer 114 is decoded. To do this, the encrypted slice of the encoded pointer 114 (and in some embodiments, the encrypted adjustment) is decrypted using a secret address key (e.g., keys 116) and an address tweak (if the address tweak was used in the encryption), as described further below.

The encoded pointer 114 is returned to its original (e.g., canonical) form, based on appropriate operations in order to restore the original value of the encoded pointer 114 (e.g., the true, original linear memory address). To do this in at least one possible embodiment, the address metadata encoded in the unused bits of the encoded pointer 114 are removed (e.g., return the unused bits to their original form). If the encoded pointer 114 decodes successfully, the memory access operation completes successfully. However, if the encoded pointer 114 has been manipulated (e.g., by software, inadvertently or by an attacker) so that its value falls outside the valid range indicated by the range metadata (e.g., overflows the buffer), the encoded pointer 114 may be corrupted as a result of the decrypting process performed on the encrypted address bits in the pointer. A corrupted pointer will raise a fault (e.g., a general protection fault or a Page Fault if the address is not mapped as present from the paging structures/page tables). One condition that may lead to a fault being generated is a sparse address space. In this scenario, a corrupted address is likely to land on an unmapped page and generate a page fault. In this way, the computing device 100 provides encoded pointer security against buffer overflow attacks and similar exploits.

Referring now in more detail to FIGURE 1, the computing device 100 may be embodied as any type of electronic device for performing the functions described herein. For example, the computing device 100 may be embodied as, without limitation, a smart phone, a tablet computer, a wearable computing device, a laptop computer, a notebook computer, a mobile computing device, a cellular telephone, a handset, a messaging device, a vehicle telematics device, a server computer, a workstation, a distributed computing system, a multiprocessor system, a consumer electronic device, and/or any other computing device configured to perform the functions described herein. As shown in FIGURE 1, the example computing device 100 includes at least one processor 102 embodied with the secure memory access logic 106, the address cryptography unit 104, and the cryptographic computing engine 108.

The computing device 100 also includes memory 120, an input/output subsystem 124, a data storage device 126, a display device 128, a user interface (Ul) subsystem 130, a communication subsystem 132, application 134, and the privileged system component 142 (which, illustratively, includes memory manager module 144 and key creation module 148). The computing device 100 may include other or additional components, such as those commonly found in a mobile and/or stationary computers (e.g., various sensors and input/output devices), in other embodiments. Additionally, in some embodiments, one or more of the example components may be incorporated in, or otherwise form a portion of, another component. Each of the components of the computing device 100 may be embodied as software, firmware, hardware, or a combination of software and hardware.

The processor 102 may be embodied as any type of processor capable of performing the functions described herein. For example, the processor 102 may be embodied as a single or multi-core central processing unit (CPU), a multiple-CPU processor or processing/controlling circuit, or multiple diverse processing units or circuits (e.g., CPU and Graphics Processing Unit (GPU), etc.).

Processor memory may be provisioned inside a core and outside the core boundary. For example, registers 110 may be included within the core and may be used to store encoded pointers (e.g., 114), secret keys 116 and possibly tweaks 117 for encryption and decryption of data or code and addresses, and certificates 118 for validating privileged access to a memory region. Processor 102 may also include cache 170, which may be L1 and/or L2 cache for example, where data is stored when it is retrieved from memory 120 in anticipation of being fetched by processor 102.

The processor may also include supplemental processor memory 180 outside the core boundary. Supplemental processor memory 180 may be a dedicated cache that is not directly accessible by software. In one or more embodiments, supplemental processor memory 180 may store the mapping 188 between parameters and their associated memory regions. For example, keys may be mapped to their corresponding memory regions in the mapping 188. In some embodiments, tweaks that are paired with keys may also be stored in the mapping 188. In other embodiments, the mapping 188 may be managed by software. Supplemental processor memory 180 may also be used to store other information such as certificates 118, in some embodiments.

Generally, keys and tweaks can be handled in any suitable manner based on particular needs and architecture implementations. In a first embodiment, both keys and tweaks may be implicit, and thus are managed by a processor. In this embodiment, the keys and tweaks may be generated internally by the processor or externally by a secure processor. In a second embodiment, both the keys and the tweaks are explicit, and thus are managed by software. In this embodiment, the keys and tweaks are referenced at instruction invocation time using instructions that include operands that reference the keys and tweaks. The keys and tweaks may be stored in registers or memory in this embodiment. In a third embodiment, the keys may be managed by a processor, while the tweaks may be managed by software.

The memory 120 of the computing device 100 may be embodied as any type of volatile or non-volatile memory or data storage capable of performing the functions described herein. Volatile memory is a storage medium that requires power to maintain the state of data stored by the medium. Examples of volatile memory may include various types of random access memory (RAM), such as dynamic random access memory (DRAM) or static random access memory (SRAM). One particular type of DRAM that may be used in memory is synchronous dynamic random access memory (SDRAM). In particular embodiments, DRAM of memory 122 complies with a standard promulgated by the Joint Electron Device Engineering Council (JEDEC), such as JESD79F for Double Data Rate (DDR) SDRAM, JESD79-2F for DDR2 SDRAM, JESD79-3F for DDR3 SDRAM, or JESD79-4A for DDR4 SDRAM (these standards are available at www.jedec.org). Non-volatile memory is a storage medium that does not require power to maintain the state of data stored by the medium. Nonlimiting examples of nonvolatile memory may include any or a combination of: solid state memory (such as planar or 3D NAND flash memory or NOR flash memory), 3D crosspoint memory, memory devices that use chalcogenide phase change material (e.g., chalcogenide glass), byte addressable nonvolatile memory devices, ferroelectric memory, silicon-oxide-nitride-oxide-silicon (SONOS) memory, polymer memory (e.g., ferroelectric polymer memory), ferroelectric transistor random access memory (Fe-TRAM) ovonic memory, nanowire memory, electrically erasable programmable read-only memory (EEPROM), other various types of non-volatile random access memories (RAMs), and magnetic storage memory.

In some embodiments, memory 120 comprises one or more memory modules, such as dual in-line memory modules (DIMMs). In some embodiments, the memory 120 may be located on one or more integrated circuit chips that are distinct from an integrated circuit chip comprising processor 102 or may be located on the same integrated circuit chip as the processor 102. Memory 120 may comprise any suitable type of memory and is not limited to a particular speed or technology of memory in various embodiments.

In operation, the memory 120 may store various data and code used during operation of the computing device 100, as well as operating systems, applications, programs, libraries, and drivers. Memory 120 may store data and/or code, which includes sequences of instructions that are executed by the processor 102.

The memory 120 is communicatively coupled to the processor 102, e.g., via the I/O subsystem 124. The I/O subsystem 124 may be embodied as circuitry and/or components to facilitate input/output operations with the processor 102, the memory 120, and other components of the computing device 100. For example, the I/O subsystem 124 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 124 may form a portion of a system-on-a-chip (SoC) and be incorporated, along with the processor 102, the memory 120, and/or other components of the computing device 100, on a single integrated circuit chip.

The data storage device 126 may be embodied as any type of physical device or devices configured for short-term or long-term storage of data such as, for example, memory devices and circuits, memory cards, hard disk drives, solid-state drives, flash memory or other read-only memory, memory devices that are combinations of read-only memory and random access memory, or other data storage devices. In various embodiments, memory 120 may cache data that is stored on data storage device 126.

The display device 128 may be embodied as any type of display capable of displaying digital information such as a liquid crystal display (LCD), a light emitting diode (LED), a plasma display, a cathode ray tube (CRT), or other type of display device. In some embodiments, the display device 128 may be coupled to a touch screen or other human computer interface device to allow user interaction with the computing device 100. The display device 128 may be part of the user interface (Ul) subsystem 130. The user interface subsystem 130 may include a number of additional devices to facilitate user interaction with the computing device 100, including physical or virtual control buttons or keys, a microphone, a speaker, a unidirectional or bidirectional still and/or video camera, and/or others. The user interface subsystem 130 may also include devices, such as motion sensors, proximity sensors, and eye tracking devices, which may be configured to detect, capture, and process various other forms of human interactions involving the computing device 100.

The computing device 100 further includes a communication subsystem 132, which may be embodied as any communication circuit, device, or collection thereof, capable of enabling communications between the computing device 100 and other electronic devices. The communication subsystem 132 may be configured to use any one or more communication technology (e.g., wireless or wired communications) and associated protocols (e.g., Ethernet, Bluetooth™, Wi-Fi™, WiMAX, 3G/LTE, etc.) to effect such communication. The communication subsystem 132 may be embodied as a network adapter, including a wireless network adapter.

The example computing device 100 also includes a number of computer program components, such as one or more user space applications (e.g., application 134) and the privileged system component 142. The user space application may be embodied as any computer application (e.g., software, firmware, hardware, or a combination thereof) that interacts directly or indirectly with an end user via, for example, the display device 128 or the UI subsystem 130. Some examples of user space applications include word processing programs, document viewers/readers, web browsers, electronic mail programs, messaging services, computer games, camera and video applications, etc. Among other things, the privileged system component 142 facilitates the communication between the user space application (e.g., application 134) and the hardware components of the computing device 100. Portions of the privileged system component 142 may be embodied as any operating system capable of performing the functions described herein, such as a version of WINDOWS by Microsoft Corporation, ANDROID by Google, Inc., and/or others. Alternatively or in addition, a portion of the privileged system component 142 may be embodied as any type of virtual machine monitor capable of performing the functions described herein (e.g., a type I or type II hypervisor).

The example privileged system component 142 includes key creation module 148, which may be embodied as software, firmware, hardware, or a combination of software and hardware. For example, the key creation module 148 may be embodied as a module of an operating system kernel, a virtual machine monitor, or a hypervisor. The key creation module 148 creates the secret keys 116 (e.g., secret address keys and secret data keys) and may write them to a register or registers to which the processor 102 has read access (e.g., a special purpose register). To create a secret key, the key creation module 148 may execute, for example, a random number generator or another algorithm capable of generating a secret key that can perform the functions described herein. In other implementations, secret keys may be written to supplemental processor memory 180 that is not directly accessible by software. In yet other implementations, secret keys may be encrypted and stored in memory 120. In one or more embodiments, when a data key is generated for a memory region allocated to a particular software entity the data key may be encrypted, and the software entity may be provided with the encrypted data key, a pointer to the encrypted data key, or a data structure including the encrypted key or pointer to the encrypted data key. In other implementations, the software entity may be provided with a pointer to the unencrypted data key stored in processor memory or a data structure including a pointer to the unencrypted data key. Generally, any suitable mechanism for generating, storing, and providing secure keys to be used for encrypting and decrypting data (or code) and to be used for encrypting and decrypting memory addresses (or portions thereof) encoded in pointers may be used in embodiments described herein.

It should be noted that a myriad of approaches could be used to generate or obtain a key for embodiments disclosed herein. For example, although the key creation module 148 is shown as being part of computing device 100, one or more secret keys could be obtained from any suitable external source using any suitable authentication processes to securely communicate the key to computing device 100, which may include generating the key as part of those processes. Furthermore, privileged system component 142 may be part of a trusted execution environment (TEE), virtual machine, processor 102, a co-processor, or any other suitable hardware, firmware, or software in computing device 100 or securely connected to computing device 100. Moreover, the key may be "secret", which is intended to mean that its value is kept hidden, inaccessible, obfuscated, or otherwise secured from unauthorized actors (e.g., software, firmware, machines, extraneous hardware components, and humans). This can include keeping the key secret from the memory region for which the key is used to perform encryption and decryption of data and/or code.

It should be apparent that embodiments described herein, including WFO instructions and associated operations, regular write instructions and associated operations, and cryptographic computing techniques can be implemented for data and/or code. For ease of illustration, embodiments and examples may be described with reference to data only. It should be understood, however, that such embodiments and examples also apply to code, although code may not be explicitly referenced.

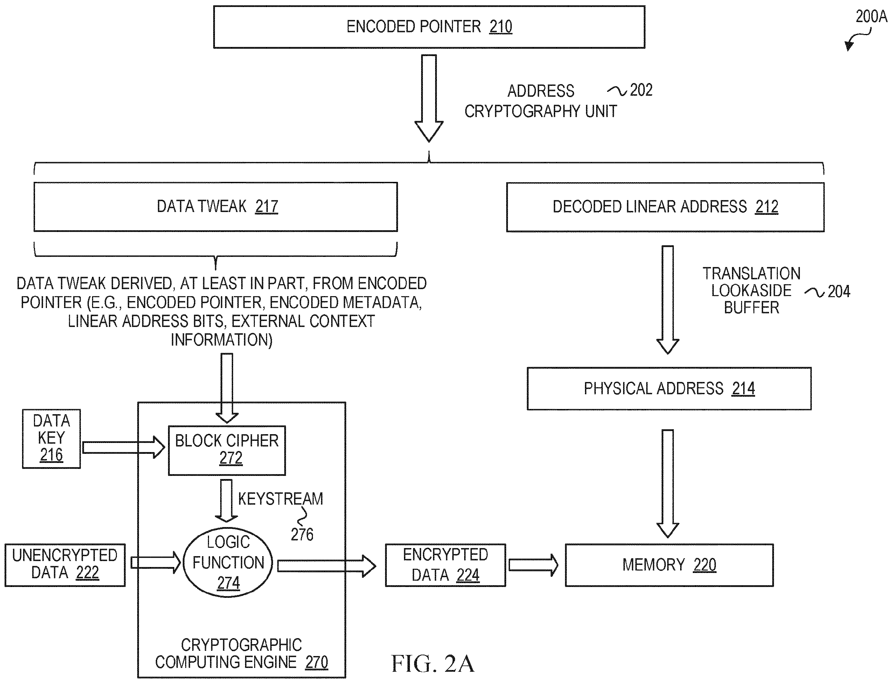

FIGURE 2A is a simplified flow diagram illustrating a general process 200A of cryptographic computing based on embodiments of an encoded pointer 210. Process 200A illustrates storing (e.g., writing) data to a memory region at a memory address indicated by encoded pointer 210, where encryption and decryption of the data is bound to the contents of the pointer according to at least one embodiment. At least some portions of process 200A may be executed by hardware, firmware, and/or software of the computing device 100. In the example shown, pointer 210 is an example of encoded pointer 114 and is embodied as an encoded linear address including a metadata portion. The metadata portion is some type of context information (e.g., size/power metadata, tag, version, etc.) and the linear address may be encoded in any number of possible configurations, at least some of which are described herein.

Encoded pointer 210 may have various configurations according to various embodiments. For example, encoded pointer 210 may be encoded with a plaintext linear address or may be encoded with some plaintext linear address bits and some encrypted linear address bits. Encoded pointer 210 may also be encoded with different metadata depending on the particular embodiment. For example, metadata encoded in encoded pointer 210 may include, but is not necessarily limited to, one or more of size/power metadata, a tag value, or a version number.

Generally, process 200A illustrates a cryptographic computing flow in which the encoded pointer 210 is used to obtain a memory address for a memory region of memory 220 where data is to be stored, and to encrypt the data to be stored based, at least in part, on a tweak derived from the encoded pointer 210. First, address cryptography unit 202 decodes the encoded pointer 210 to obtain a decoded linear address 212. The decoded linear address 212 may be used to obtain a physical address 214 in memory 220 using a translation lookaside buffer 204. A data tweak 217 is derived, at least in part, from the encoded pointer 210. For example, the data tweak 217 may include the entire encoded pointer, one or more portions of the encoded pointer, a portion of the decoded linear address, the entire decoded linear address, encoded metadata, and/or external context information (e.g., context information that is not encoded in the pointer).

Once the tweak 217 has been derived from encoded pointer 210, a cryptographic computing engine 270 can compute encrypted data 224 by encrypting unencrypted data 222 based on a data key 216 and the data tweak 217. In at least one embodiment, the cryptographic computing engine 270 includes an encryption algorithm such as a keystream generator, which may be embodied as an AES-CTR mode block cipher 272, at a particular size granularity (any suitable size). In this embodiment, the data tweak 217 may be used as an initialization vector (IV) and a plaintext offset of the encoded pointer 210 may be used as the counter value (CTR). The keystream generator can encrypt the data tweak 217 to produce a keystream 276 and then a cryptographic operation (e.g., a logic function 274 such as an exclusive-or (XOR), or other more complex operations) can be performed on the unencrypted data 222 and the keystream 276 in order to generate encrypted data 224. It should be noted that the generation of the keystream 276 may commence while the physical address 214 is being obtained from the encoded pointer 210. Thus, the parallel operations may increase the efficiency of encrypting the unencrypted data. It should be noted that the encrypted data may be stored to cache (e.g., 170) before or, in some instances instead of, being stored to memory 220.

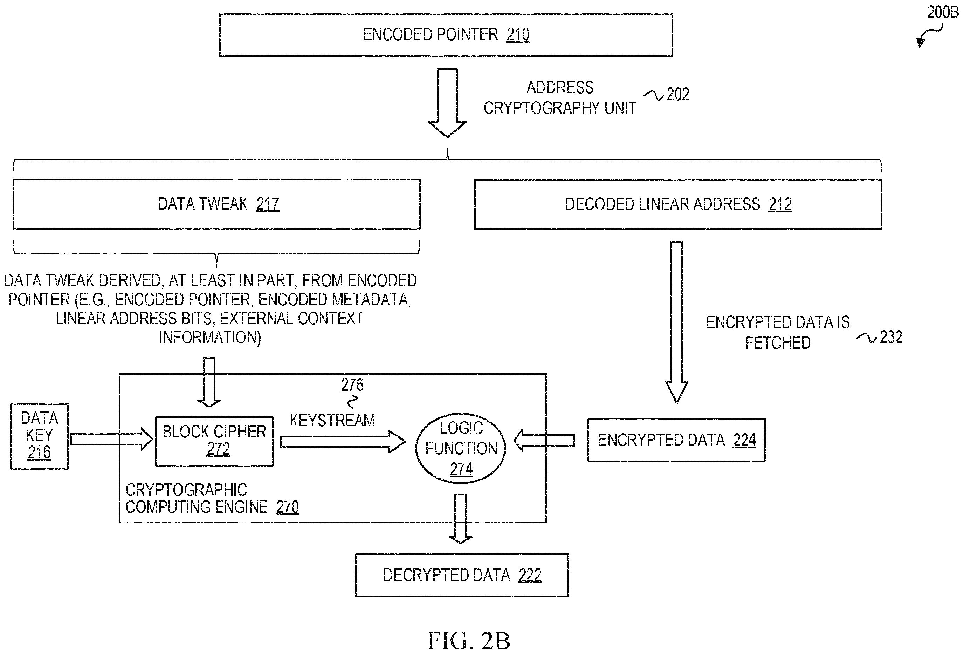

FIGURE 2B is a simplified flow diagram illustrating a general process 200B of cryptographic computing based on embodiments of encoded pointer 210. Process 200B illustrates obtaining (e.g., reading, loading, fetching) data stored in a memory region at a memory address that is referenced by encoded pointer 210, where encryption and decryption of the data is bound to the contents of the pointer according to at least one embodiment. At least some portions of process 200B may be executed by hardware, firmware, and/or software of the computing device 100.

Generally, process 200B illustrates a cryptographic computing flow in which the encoded pointer 210 is used to obtain a memory address for a memory region of memory 220 where encrypted data is stored and, once the encrypted data is fetched from the memory region, to decrypt the encrypted data based, at least in part, on a tweak derived from the encoded pointer 210. First, address cryptography unit 202 decodes the encoded pointer 210 to obtain the decoded linear address 212, which is used to fetch the encrypted data 224 from memory, as indicated at 232. Data tweak 217 is derived, at least in part, from the encoded pointer 210. In this process 200B for loading/reading data from memory, the data tweak 217 is derived in the same manner as in the converse process 200A for storing/writing data to memory.

Once the tweak 217 has been derived from encoded pointer 210, the cryptographic computing engine 270 can compute decrypted (or unencrypted) data 222 by decrypting encrypted data 224 based on the data key 216 and the data tweak 217. As previously described, in this example, the cryptographic computing engine 270 includes an encryption algorithm such as a keystream generator embodied as AES-CTR mode block cipher 272, at a particular size granularity (any suitable size). In this embodiment, the data tweak 217 may be used as an initialization vector (IV) and a plaintext offset of the encoded pointer 210 may be used as the counter value (CTR). The keystream generator can encrypt the data tweak 217 to produce keystream 276 and then a cryptographic operation (e.g., the logic function 274 such as an exclusive-or (XOR), or other more complex operations) can be performed on the encrypted data 224 and the keystream 276 in order to generate decrypted (or unencrypted) data 222. It should be noted that the generation of the keystream may commence while the encrypted data is being fetched at 232. Thus, the parallel operations may increase the efficiency of decrypting the encrypted data.

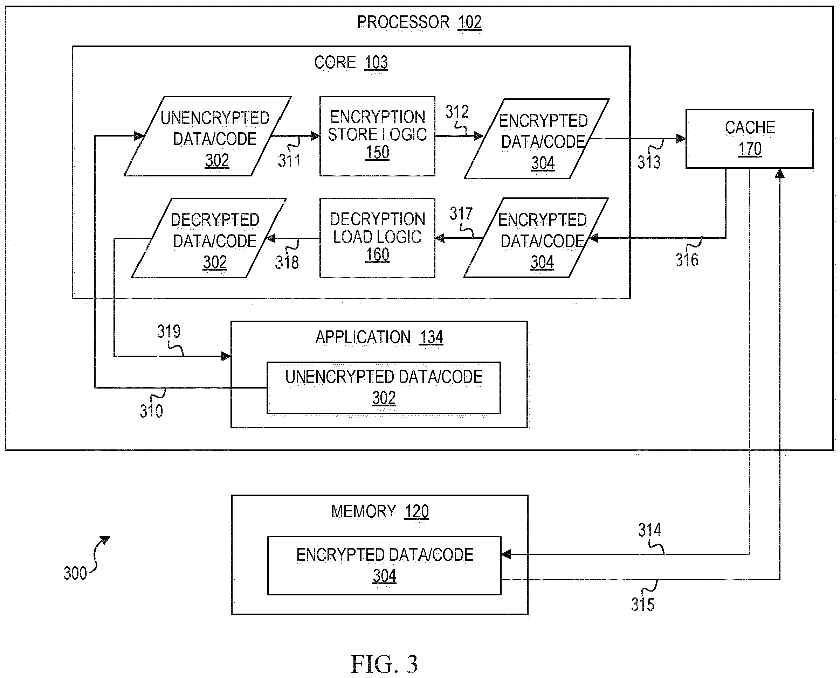

FIGURE 3 is a simplified flow diagram of a data flow 300 through various components of computing device 100 according to at least one embodiment. The data flow 300 assumes a key for encrypting and decrypting the data is known. By way of example, the processor 102 may have obtained or generated a key, or application 134 may have established its credentials to the processor and obtained a key from the processor 102. The components involved in the data flow 300 shown in FIGURE 3 include the processor 102, a core 103 of the processor, cache 170 (such as L1 cache), memory 120, and application 134. Although FIGURE 3 is described with reference to application 134, it should be apparent that the concepts described with reference to FIGURE 3 are applicable to any software entity that executes an encrypted write instruction (e.g., regular write instruction, write for ownership instruction) or a decrypted read instruction (e.g., read and decrypt, load and decrypt, move and decrypt).

Initially, application 134 may be instantiated as a process on processor 102 and may have unencrypted data and/or code 302 to be encrypted. Application 134 may execute an instruction to encrypted write (e.g., write for ownership) the unencrypted data/code 302. At 310, unencrypted data/code 302 is passed to the core 103. For example, the unencrypted data/code 302 may be stored in a register. For a WFO instruction, a certificate is presented in the WFO instruction and verified by the processor 102 for any data is written. For a regular write instruction, a preceding read operation is first performed at the same memory address the write operation is to access. For this discussion, it is assumed that, for a WFO instruction, the certificate has been verified or for a regular write instruction, a successful read at the same memory address has already been performed.

At 311, the unencrypted data/code 302 is accessed by encryption store logic 150, which performs a cryptographic algorithm on the unencrypted data/code 302 based at least in part on the key obtained or generated by application 134. In one or more embodiments, the key or an indication of the key may be passed to core 103 by application 134 as an operand in an encrypted write instruction (e.g., regular write instruction, write for ownership instruction).

At 312, encryption store logic 150 generates encrypted data/code 304 as a result of performing the cryptographic algorithm. Once the encrypted data/code 304 is generated, at 313, it is passed out of core 103. In the example data flow 300 of FIGURE 3, the encrypted data/code 304 may be passed to cache 170 (e.g., L1 cache in processor 102). At 314, the encrypted data/code 304 may be stored in memory 120 (e.g., main memory of computing device 100). In other embodiments, the encrypted data/code 304 may bypass L1 cache and be stored directly into memory 120.

When application 134 needs to use or execute the data or code stored in memory 120, it may execute a decrypted read instruction to read and decrypt the encrypted data/code 304. At 315, encrypted data/code 304 is passed to the cache 170. At 316, the encrypted data/code 304 is passed to core 103. At 317, the encrypted data/code 304 is accessed by decryption load logic 160, which performs the cryptographic algorithm on the encrypted data/code 304 based at least in part on the same key obtained or generated by application 134. In one or more embodiments, the key or an indication of the key may be passed to core 103 by application 134 as an operand in the decrypt and move instruction.

At 318, decryption load logic 160 generates unencrypted (or decrypted) data/code 302 as a result of performing the cryptographic algorithm on the encrypted data/code. Once the unencrypted data/code 302 is generated, at 319, it is passed out of core 103. For example, the unencrypted data/code 302 may be made available to application 134 by being stored in a register. Thus, application 134 can perform operations on and manipulate the unencrypted data or can execute the unencrypted code. Once the application 134 is finished performing operations on the data (or executing the code), it can execute another encrypted write instruction (e.g., regular write instruction) to re-encrypt the data or code and store it in memory 120 again.

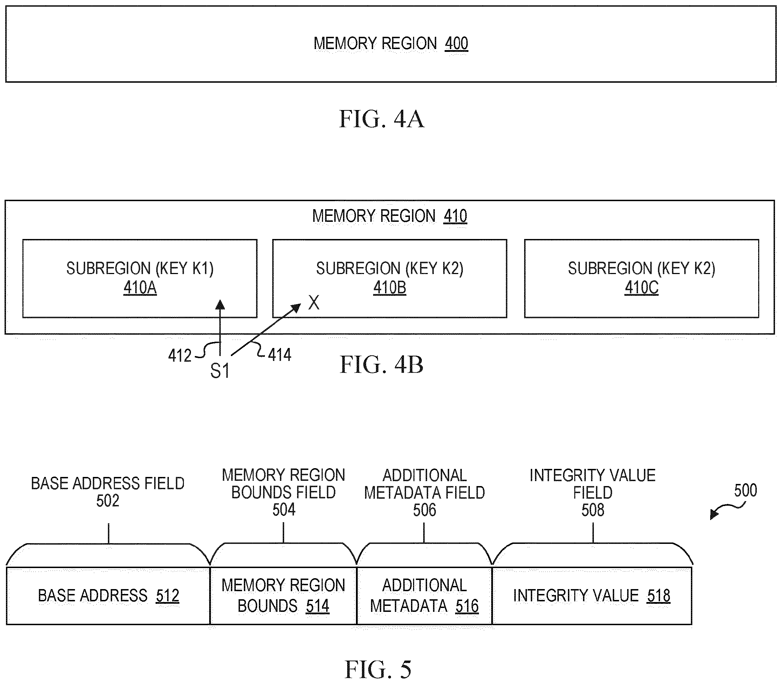

FIGURES 4A and 4B are block diagrams illustrating possible instantiations of memory regions of memory (e.g., 120) in a computing device (e.g., 100) according to at least one embodiment. FIGURE 4A illustrates an example memory region 400 having a single area that is allocated to a software entity, where the software entity has requested and received, or has otherwise obtained, privileged access to the memory region 400 from a processor. Examples of software entities to which privileged access may be granted for a particular memory region by a processor can include, but are not necessarily limited to a trusted execution environment, virtual machine, an operating system, a system application, or a user space application (e.g., 134).

In one or more embodiments, privileged access to a particular memory region includes write for ownership (WFO) privileges to that memory region, which will be further described herein. As used herein, the term "parent software entity" is intended to refer to a software entity to which a memory region is allocated and to which WFO privileges have been granted. For example, memory region 400 may be allocated to a parent software entity S0. In this example, the parent software entity S0 may execute a WFO instruction with a single parameter or a single combination of parameters (e.g., a key, a tweak, or a key and tweak) to initialize the entire memory region 400 with data or code that is encrypted based on the parameter or combination of parameters. This write access can effectively isolate memory region 400 from other memory regions potentially owned and isolated by other software entities using other parameters.

FIGURE 4B illustrates another example of a memory region 410 that may be allocated to a parent software entity S0. A parent software entity S0 has WFO privileges for the entire memory region 410. The parent software entity S0 can use WFO instructions to initialize three different memory areas (or subregions) within the allocated memory region 410 with data encrypted using three different parameters (e.g., three different keys). In this example, subregion 410A is initialized with first data encrypted using a first parameter (e.g., key K1), subregion 410B is initialized with second data encrypted using a second parameter (e.g., key K2), and subregion 410C is initialized with third data encrypted using a third parameter (e.g., key K3). In another example, the memory subregions can be differentiated or isolated by using different tweaks in with the same key to encrypt the respective data used to initialize the subregions.

Access to memory regions that are allocated to a parent software entity can also be given to other software entities referred to herein as "child software entities." For example, a parent software entity with privileged access to memory region 410 may give a child software entity access to a subregion with regular write privileges rather than WFO privileges. Because regular write operations are preceded by a memory read on the same address, a read on an address in another subregion can cause a fault. For example, consider a child software entity S1 that is given regular write access to subregion 410A with key K1, as shown at 412. Because the child software entity S1 does not possess a certificate that the parent software entity S0 possesses, the child software entity cannot perform a WFO operation and instead, performs a regular write operation. If the child software entity S1 performs an out-of-bound access using a regular write instruction for subregion 410B, a fault is generated as shown at 414. Because the write operation is regular (i.e., not write for ownership) a preceding read access is performed and results in some encrypted content from subregion 410B being decrypted with the wrong key (i.e., key K1). Using one or more suitable integrity checks, the results of the decryption can indicate that the read access was out of bounds and the write operation can be blocked. Suitable integrity checks can include, but are not necessarily limited to checking the validity of separately stored integrity values (e.g., message authentication codes (MACs)), checking that certain canary values have the values they are supposed to have, and/or checking the entropy of the decrypted content.

FIGURE 5 is a diagram showing one possible example of the structure and contents of a write for ownership (WFO) certificate 500, which may be presented by an instruction to the processor to allow WFO access to an address of a memory region (e.g., main memory region or subregion). In one or more embodiments, certificate 500 is produced and signed by a processor (e.g., 102) and is required for a software entity to issue WFO accesses to initialize a memory with its own data. A certificate may include some fields that are similar to the fields of an encoded pointer, as previously described herein. A certificate may have one or more fields that are similar to the fields of an encoded pointer, but may be any suitable size depending on particular needs and implementations. For example, certificate 500 may be any size in bits (e.g., 64 bits, 128 bits, 256 bits, etc.) that can be stored in a register such as a ymm register or a zmm register. In other embodiments, other types of secure memory may be used to store certificates 500, the certificate may be encrypted and stored in main memory, or the WFO instruction can present a pointer to the certificate or encrypted certificate. In one or more embodiments, a valid certificate verifies that the software entity presenting the certificate is authorized to access a particular memory region once, at initialization time. An encoded pointer (cryptographically or non-cryptographically) may be smaller in size and used for regular accesses to a memory region, potentially multiple times.

In one or more embodiments, certificate 500 includes a base address field 502, a memory region bounds field 504, an additional metadata field 506, and an integrity value field 508. Base address field 502 can contain a base address 512 of the memory region for which the certificate authorizes WFO privileged access. Memory region bounds field 504 contains memory region bounds 514 of the memory region for which the certificate authorizes WFO privileged access. Memory region bounds 514 can be provided in any suitable manner including, but not limited to a size of the memory region or an upper address of the memory region. Additional metadata field 506 contains additional metadata 516 associated with the memory region for which the certificate authorizes WFO privileged access. The additional metadata 516 can include, but is not necessarily limited to access privileges (e.g., write privilege, read privilege, execute privilege, etc.) and/or field types.

The integrity value field 508 contains an integrity value 518, which may represent a signature of the processor on the certificate 500. In other implementations, the certificate may include another field or use some other suitable mechanism to enable the processor to authenticate (e.g., sign) the certificate. Integrity value 518 can be any suitable value that enables the processor to perform an integrity check to verify the integrity of the certificate when the certificate 500 is presented by software. For example, integrity value 518 may be embodied as a message authentication code (MAC), which can be computed based on one or more other fields in the certificate by a cryptographic hash function using a secret key. In one or more embodiments, the secret key may be known only to the processor. In one example, a processor can invoke a cryptographic hash function, which uses a secret key known to the processor, to compute a MAC value based on one or more other fields in the certificate such as the base address 512, the memory region bounds 514, and/or the additional metadata 516. When the certificate 500 is presented in an instruction executed by a software entity, the processor can use the same cryptographic hash function and the same secret key to compute a new MAC value based on the one or more fields in the certificate that were previously used to compute the MAC value stored in the integrity value field 508 of the certificate 500. If the new MAC value matches (or otherwise corresponds to) the MAC value in the certificate 500, then the integrity check succeeds and the integrity of the certificate 500 (and its fields) are verified. In this case, the software entity presenting the certificate is permitted to perform privileged memory accesses (e.g., write for ownership access) to the memory region identified in the certificate. If the new MAC value does not match (or otherwise correspond to) the MAC value in the certificate, then the integrity of the certificate 500 cannot be verified and the software entity presenting the certificate 500 is blocked from using privileged WFO memory access.

In further embodiments, a certificate generated by a processor for a larger memory region may be used to generate one or more certificates for smaller regions (or subregions) defined within the larger memory region. The certificate of the larger memory region may be referred to herein as a "parent certificate," and the certificates of the smaller regions defined within a larger memory region may be referred to herein as "child certificates." Child certificates can be generated to give child software entities privileged WFO access to the smaller regions.

In one or more embodiments, a child certificate can be generated by executing a child certificate generation instruction, which accepts as input a parent certificate as well as a non-authenticated child certificate for a narrower region than the memory region specified in the parent certificate. This instruction checks the validity of the parent certificate (e.g., by performing an integrity check of the integrity value in the parent certificate) and also checks whether the child certificate specifies a narrower region that is included in the larger memory region specified in the parent certificate. This check may be performed by evaluating the base addresses and memory region bounds in the certificates. If the checks pass, the processor signs the child certificate by computing an integrity value (e.g., a MAC value) and adding the integrity value to the integrity field of the certificate. In at least one embodiment, the signed child certificate allows a child software entity to have complete control over the narrower region for which the child certificate authorizes privileged WFO access.

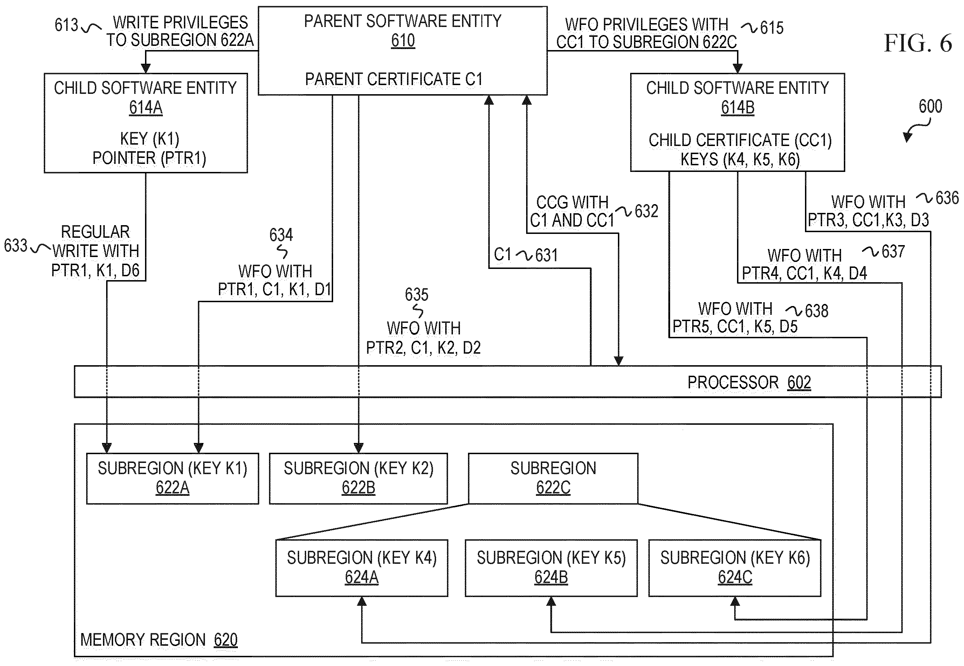

Turning to FIGURE 6, FIGURE 6 is a flow diagram illustrating a process 600 in which both privileged write instructions and regular (or non-privileged) write instructions are used by a parent software entity 610 and its first and second child software entities 614A and 614B, which are being executed by a processor 602, to write to a memory region 620. At 631, parent software entity 610 obtains a parent certificate C1 from processor 602 for memory region 620. In one or more embodiments, parent software entity 610 may execute a parent certificate generation instruction (e.g., invoking parent certificate generation logic 156) to obtain an authenticated parent certificate C1 that grants write for ownership privileges to memory region 620. The processor 602 generates and authenticates (e.g., by signing) parent certificate C1 and provides the certificate to parent software entity 610. In one or more embodiments, BIOS firmware of the processor 602 may generate and sign the parent certificate C1.

Once parent software entity 610 obtains a valid parent certificate, it can execute WFO instructions to initialize subregions 622A, 622B, and 622C of memory region 620 with data that is encrypted using a different key for each subregion. A memory region can be "initialized" by a software entity when data is written to the memory region for the first time after the software entity is initiated. A memory region can also be "re-initialized" in some instances to use a different parameter to encrypt the data stored in that region.

In this example, at 634, parent software entity 610 executes a WFO instruction with parent certificate C1, an encoded pointer PTR1 to subregion 622A, and a first key K1 to encrypt first data D1. Based on determining that the parent certificate C1 authorizes access to subregion 622A (e.g., by performing an integrity check on the integrity value in the parent certificate C1), subregion 622A is initialized with the encrypted first data. At 635, parent software entity 610 executes a WFO instruction with parent certificate C1, an encoded pointer PTR2 to subregion 622B, and a second key K2 to encrypt second data D2. Based on determining that the parent certificate C1 authorizes access to subregion 622B, subregion 622B is initialized with the encrypted second data.

Parent software entity 610 can also give regular write privileges and WFO privileges to child software entities for the subregions of memory region 620. In this example, parent software entity 610 may not initialize subregion 622C, but instead gives the second child software entity 614B WFO privileges to subregion 622C. Parent software entity 610 can execute a child certificate generation (CCG) instruction (e.g., invoking child certificate generation logic 158) to obtain an authenticated child certificate CC1 that grants WFO privileges for the desired subregion of memory. In this example, the desired subregion is subregion 622C. The CCG instruction includes the parent certificate C1 and a non-authenticated child certificate C1. The processor 602 determines the validity of the parent certificate C1 (e.g., by performing an integrity check of the integrity value in the parent certificate C1). The processor 602 also determines whether the non-authenticated child certificate CC1 specifies a valid region to which it is requesting access. For example, if the specified region in the child certificate CC1 is included within the boundaries of memory region 620, which is owned by parent software entity 610, then the specified region is valid. If both the parent certificate C1 and the specified region in the child certificate are determined to be valid, then the processor 602 authenticates the child certificate CC1 for example, by signing the child certificate CC1 (e.g., computing an integrity value and storing it in the child certificate CC1). At 632, the processor 602 then provides the authenticated child certificate CC1 to parent software entity 610.

In this example, at 615, parent software entity 610 gives WFO privileges for subregion 622C to child software entity 614B by providing the child certificate CC1 to the child software entity 614B. Child software entity 614B can initialize subregion 622C with its own encrypted data. In one example, child software entity 614B could execute a WFO instruction with an encoded pointer to subregion 622C, the child certificate CC1, and a key to encrypt data to initialize the entire area of subregion 622C. In another example, child software entity 614B executes WFO instructions to initialize multiple subregions of subregion 622C. As shown in FIGURE 6, at 636, child software entity 614B executes a WFO instruction with child certificate CC1, an encoded pointer PTR3 to subregion 624A, and a third key K3 to encrypt third data D3. Based on determining that the child certificate CC1 authorizes access to subregion 624A (e.g., by performing an integrity check on the integrity value in the child certificate CC1), subregion 624A is initialized with the encrypted third data D3. At 637, child software entity 614B executes a WFO instruction with child certificate CC1, an encoded pointer PTR4, and a fourth key K4 to encrypt fourth data D4. Based on determining that the child certificate CC1 authorizes access to subregion 624B, subregion 624B is initialized with the encrypted fourth data D4. At 638, child software entity 614B executes a WFO instruction with child certificate CC1, an encoded pointer PTR5, and a fifth key K5 to encrypt fifth data D5. Based on determining that the child certificate CC1 authorizes access to subregion 624C, subregion 624C is initialized with the encrypted fifth data D5.

Some child entities may not be granted WFO privileged access to a memory region but instead may be granted regular write privileges to a memory region or one or more of its subregions. In the example of FIGURE 6, parent software entity 610 gives the child software entity 614A regular write privileges to subregion 622A. Child software entity 614A can execute a regular write instruction to write its own data to subregion 622A. In one example, child software entity 614B executes the regular write instruction using an encoded pointer PTR1 (as previously described herein), and the key K1 that was used by parent software entity 610 to encrypt first data D1 stored in subregion 622A. The key K1 is used to encrypt sixth data D6. Because the instruction is a regular write instruction, a read operation is performed on subregion 622A using encoded pointer PTR1 prior to writing any new data to the subregion. If the write instruction is attempting to access memory that is out of bounds (e.g., in another subregion of memory region 620 or in another memory region), then decoding the encoded pointer PTR1 and/or decrypting the encrypted data D1 will result in an error. For example, an integrity check for the data D1 may fail (e.g., message authentication code (MAC) on a cacheline), a canary value in the decrypted data D1 may fail, or the amount of entropy detected in the decrypted data D1 may indicate an error based on a relevant entropy threshold. If an error is detected in the preceding read operation, then the regular write access is blocked. If the preceding read operation succeeds, however, then the new encrypted sixth data D6 may be written to subregion 622A.

It should be apparent that an originally-allocated memory region such as memory region 620 may not be divided into any subregions, or could be divided into any number of subregions (also referred to herein as "first-level subregions") where each first-level subregion (e.g., 622A, 622B, 622C) may be initialized using a WFO instruction with data that is encrypted using a different parameter or different parameter combination (e.g., different keys, same key and different tweaks, etc.). Furthermore, a first-level subregion of an originally-allocated memory region may not be divided into further subregions, or could be divided into any number of subregions (also referred to herein as "second-level subregions) where each second-level subregion (e.g., 624A, 624B, 624C) may be initialized using a WFO instruction with data that is encrypted using a different parameter or different parameter combination (e.g., different keys, same key and different tweaks, etc.). Any number of nested levels of subregions of a memory region may be instantiated based on particular needs and implementations. Moreover, a child software entity may be given WFO privileged access to one or more subregions, regular read access to one or more subregions, or any suitable combination thereof.

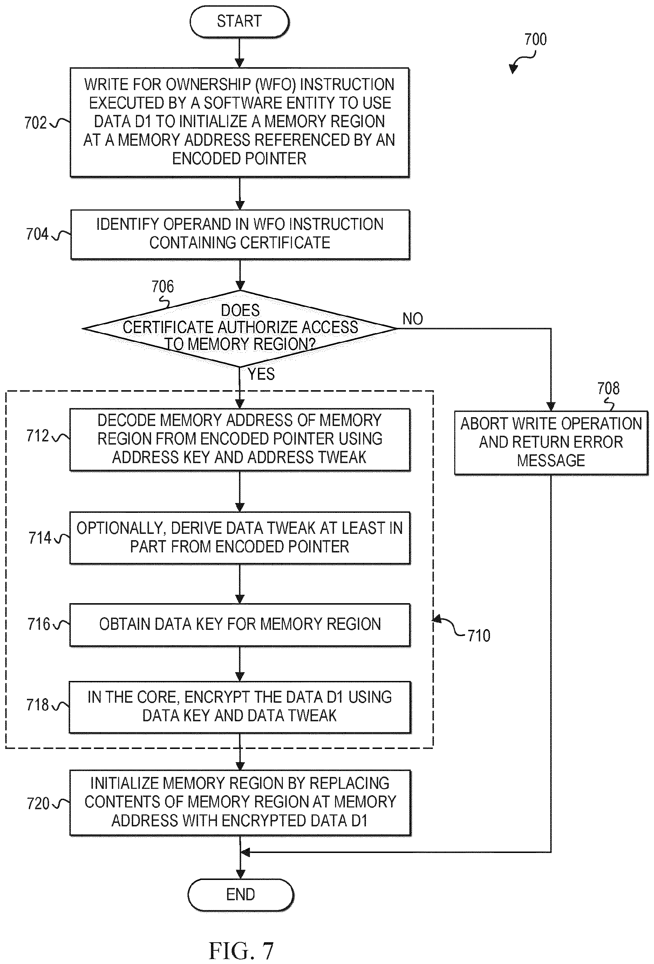

Turning to FIGURE 7, FIGURE 7 is a flow diagram illustrating an example process 700 associated with a write for ownership (WFO) instruction according to one or more embodiments. Process 700 may be associated with one or more sets of operations. A computing system (e.g., computing device 100) may comprise means such as hardware, firmware, and/or software of the computing device 100 for performing the operations. In one example, at least some of the operations of WFO memory store logic 154 may be performed by processor 102.

Process 700 begins when some data (e.g., D1) becomes available to be written to memory. At 702, a WFO instruction is executed by a software entity (e.g., a parent software entity or child software entity) to use data D1 to initialize a memory region (e.g., main memory region or subregion) at a memory address referenced by an encoded pointer. Execution of the WFO instruction causes a write for ownership memory operation or micro-operation to be issued. The WFO memory operation or micro-operation is associated with a data key (e.g., K1) and the memory address (e.g., A1) of the memory region where the data D1 is to be written. In at least one embodiment, the WFO instruction can include a first operand containing a certificate and a second operand containing the pointer encoded with the memory address (e.g., a linear address) of the memory region.

Because the instruction is a WFO instruction, rather than a regular write instruction, there is no preceding read operation performed from the same memory address A1. Instead, the WFO memory operation is used for directly writing into memory without performing any integrity checks of the memory region's contents. Accordingly, at 704, the first operand containing the certificate in the WFO instruction is identified. At 706, a determination is made as to whether the certificate authorizes access (e.g., write access) to the memory region. In at least one embodiment, this determination includes a verification of an integrity value (e.g., 518) in the certificate to determine whether the certificate itself is valid. For example, the integrity value may be a message authentication code (MAC) computed over one or more other fields in the certificate using a key for certificate signatures known to the processor. To determine whether the certificate is valid, the processor may use the same certificate key it possesses to produce a new MAC from the same one or more other fields in the presented certificate. If the MAC stored in the presented certificate does not match or otherwise correspond to the newly produced MAC, then the certificate is not valid, and therefore, does not authorize access to the memory region by the software entity. In this case, at 708, the write operation may be aborted and an error message may be returned to indicate an out-of-bounds access error.

If the MAC stored in the presented certificate matches or otherwise corresponds to the newly produced MAC, then the presented certificate is determined to be valid. If the certificate is valid, then the certificate authorizes access by the software entity to the memory region indicated by the memory address A1. Accordingly, at 712, the memory address A1 (e.g., linear address) of the memory region is obtained by decoding the encoded pointer. If the pointer is cryptographically encoded, then at least a portion of the pointer may be decrypted using an address key and possibly an address tweak to obtain a decrypted slice of the memory address, which is combined with other plaintext portions of the linear address to produce the full plaintext linear address, as previously described herein.

At 714, a data tweak (e.g., T1) may be derived at least in part from the encoded pointer, as previously described herein. For example, the data tweak T1 may be the entire encoded pointer (which may or may not be cryptographically encoded). In another example, the metadata from the encoded pointer and the linear address computed from the encoded pointer may be part of the data tweak T1. In yet other embodiments, external context information may be part of the data tweak T1. In at least some embodiments, the data tweak T1 may be used to differentiate subregions defined within a larger memory region or within a larger memory subregion. In yet other embodiments, a data tweak T1 may not be derived from the encoded pointer. Rather, a simple counter/initialization vector (IV) may be used. In this case, different data keys may be used to differentiate subregions. In yet other embodiments, the combination of different keys for each subregion and different data tweaks derived from the encoded pointers to those subregions may be used to differentiate subregions.

At 716, the data key K1 associated with the memory region may be obtained. An operand of the WFO instruction may be used to obtain the data key K1 for the memory region. The operand may contain any suitable content (e.g., an encrypted key, a pointer to an encrypted key stored in memory, a pointer to an unencrypted key stored in processor memory, a data structure containing an encrypted key, a data structure containing a pointer to an encrypted key or to an unencrypted key in processor memory, etc.) from which the data key K1 can be obtained. If the memory region to be initialized is a subregion of a larger area of memory allocated to the software entity, then the data key K1 may be one of several data keys to be used to encrypt data for respective subregions of the larger memory region or larger memory subregion.

At 718, the data D1 to be written to memory is encrypted to produce encrypted data D1 based at least in part on the data key K1 and the data tweak T1. In at least one embodiment, the encryption is performed in the core of the processor. The encryption may be performed using a block cipher (e.g., a tweakable block cipher (e.g., XOR-encrypt-XOR-based tweaked-codebook mode with ciphertext stealing (XTS)), or any other suitable cryptographic algorithm as previously described herein.

At 720, the memory region is initialized by replacing the contents of the memory region with the encrypted data D1. This can be achieved by performing a write operation to store the encrypted data D1 to memory based on the memory address A1. The decoded linear address obtained at 712 may be used to obtain a physical address and the encrypted data D1 may be written to the memory region based on the physical address.

In another embodiment, neither a certificate nor a preceding read operation is required before the write operation is performed. Instead, a direct write (e.g. a non-temporal store) operation is used where the direct operation is not preceded by a read operation and a check for a valid certificate is not performed. In this embodiment, none of the prior memory contents are revealed before the write operation overwrites the previous data preserving the secrets. This is an implicit change of memory ownership. In these cases, even if the data is corrupted (e.g., because the direct write operation is performed by a malware or by an inadvertent software error) if the overwritten data is again accessed by the previous owner whose data was overwritten, the integrity checks will fail (e.g. MAC values will not match) causing an error and preventing the consumption of the corrupted data.

It should be further noted that, although the operations of process 700 are illustrated in sequence, any suitable order or timing of the various operations may be used. For example, in at least one embodiment, one or more operations identified at 710, may be performed at least partially in parallel with other operations of process 700. In one possible implementation, while the certificate is being evaluated (e.g., 704, 706) to determine whether it authorizes access to the memory region, one or more of the operations of 710 to encrypt the data to be stored may be occurring. In yet a further possible implementation, one or more operations indicated at 714-716 may be performed at least partially in parallel with decoding the memory address of the memory region from the encoded pointer at 712. In these possible alternative implementations, or some combination thereof, efficiency could be improved as the process may be completed more quickly.

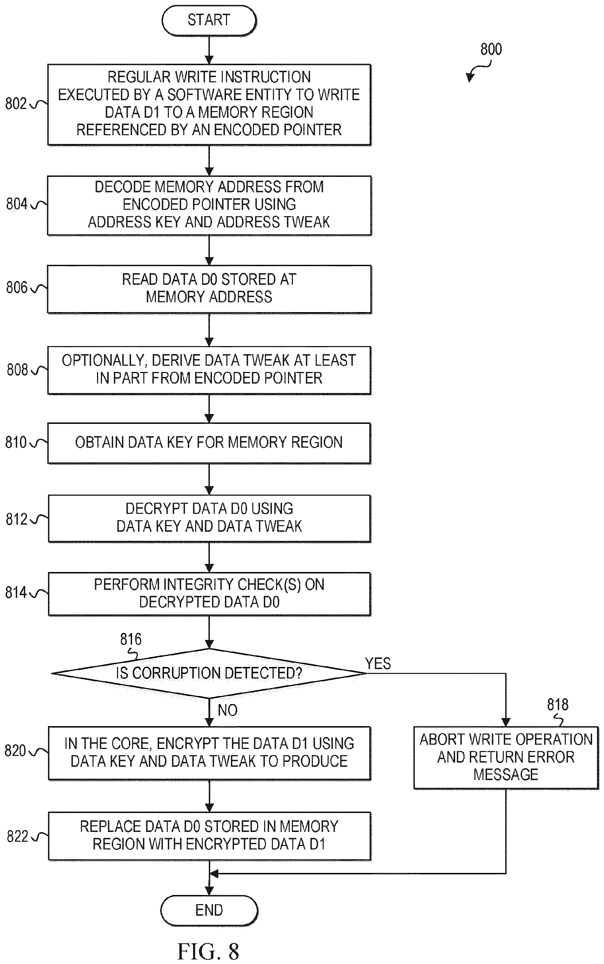

FIGURE 8 is a flow diagram illustrating an example process 800 associated with a regular write instruction according to one or more embodiments. Process 800 may be associated with one or more sets of operations. A computing system (e.g., computing device 100) may comprise means such as hardware, firmware, and/or software of the computing device 100 for performing the operations. In one example, at least some of the operations of the regular write memory store logic 152 may be performed by the processor 102.

Process 800 begins when some data (e.g., D1) becomes available to be written to memory. At 802, a regular write instruction is executed by a software entity (e.g., a parent software entity or child software entity) to write data D1 to a memory region at a memory address referenced by an encoded pointer. Execution of the regular write instruction causes a regular write memory operation or micro-operation to be issued. The regular write memory operation or micro-operation is associated with a data key (e.g., K1) and the memory address (e.g., A1) of the memory region where the data D1 is to be written. In at least one embodiment, the WFO instruction can include a first operand containing the pointer encoded with the memory address (e.g., a linear address) of the memory region.

Because the instruction is a regular write instruction, rather than a WFO write instruction, a preceding read operation is performed from the same memory address A1. Thus, the integrity of the memory region's content can be evaluated to determine whether the content is corrupted or the write operation is attempting to perform an out of bounds access. Accordingly, at 804, the memory address (e.g., linear address) of the memory region is obtained by decoding the encoded pointer. If the pointer is cryptographically encoded, then at least a portion of the pointer may be decrypted using an address key and possibly an address tweak to obtain a decrypted slice of the memory address, which is combined with other plaintext portions of the linear address to produce the full plaintext linear address, as previously described herein.

At 806, the content of the memory region is read based on the decoded linear address. For ease of illustration, we assume that the memory region contains data D0. In at least some scenarios, the physical address of the memory region may be obtained based on the linear address and then used to access the memory region. The physical address can then be used to access the memory region to read data D0. In other scenarios, if data D0 is currently stored in cache (e.g., 170), then it may be read from the cache.

At 808, a data tweak T1 may be derived at least in part from the encoded pointer, as previously described herein. For example, the data tweak T1 may be the entire encoded pointer (which may or may not be cryptographically encoded). In another example, the metadata from the encoded pointer and the linear address computed from the encoded pointer may be part of the data tweak T1. In yet other embodiments, external context information may be part of the data tweak T1. In at least some embodiments, the data tweak T1 may be used to differentiate subregions defined within a larger memory region or within a larger memory subregion. In yet other embodiments, a data tweak T1 may not be derived from the encoded pointer. Rather, a simple counter/initialization vector (IV) may be used. In this case, different data keys may be used to differentiate subregions. In yet other embodiments, the combination of different keys for each subregion and different data tweaks derived from the encoded pointers to those subregions may be used to differentiate subregions.

At 810, the data key K1 associated with the memory region may be obtained. An operand of the regular write instruction may be used to obtain the data key K1 for the memory region. The operand may contain any suitable content (e.g., an encrypted key, a pointer to an encrypted key stored in memory, a pointer to an unencrypted key stored in processor memory, a data structure containing an encrypted key, a data structure containing a pointer to an encrypted key or to an unencrypted key in processor memory, etc.) from which the data key K1 can be obtained. If the memory region to be initialized is a subregion of a larger area of memory allocated to the software entity, then the data key K1 may be one of several data keys to be used to encrypt data for respective subregions of the larger memory region or larger memory subregion.

At 812, the data D1 read from memory is decrypted to produce decrypted data D0 based at least in part on the data key K1 and the data tweak T1. In at least one embodiment, the decryption is performed in the core of the processor. The decryption may be performed using a block cipher (e.g., a tweakable block cipher (e.g., XOR-encrypt-XOR-based tweaked-codebook mode with ciphertext stealing (XTS)), or any other suitable cryptographic algorithm as previously described herein.

At 814, one or more integrity checks are performed to detect corruption, which may occur if the read data D1 was encrypted with a different data key or if the regular write operation is attempting an out of bounds access. Any suitable integrity checking technique may be used. One technique includes checking the validity of a separately stored integrity value (e.g., MAC value) of the decrypted data D0. A cryptographic hash function could be applied to the decrypted data D0 to compute a new MAC value. The new MAC value could be compared to a stored MAC value that was previously computed for data D0 for example, as part of the previous write instruction (e.g., WFO instruction or regular write instruction) before data D0 was encrypted for storing in the memory region. Corruption is detected if the new MAC value and the stored MAC value do not match. However, if the MAC values match, then the integrity check passes. It should be noted that alternatively, the MAC integrity check could be performed on the encrypted data (e.g., MAC values computed on encrypted data). A second integrity check involves checking the decrypted data D0 for one or more canary values that the decrypted data D0 is supposed to contain. If the canary values are found in the decrypted data D0, then the integrity check indicates there is no corruption. Otherwise, the integrity check indicates there may be corruption. A third integrity check involves checking an entropy of the decrypted data D0. Corruption can be detected based on the entropy of the decrypted data D0 and an entropy threshold. For example, a higher amount of entropy in unencrypted (or decrypted) data can indicate corruption of the data and thus the wrong key/tweak was used to access the data.

At 816, a determination is made as to whether an integrity violation occurred in one or more of the integrity checks. If an integrity violation occurs, then corruption is detected and at 818, the write operation may be aborted and an error message may be returned to indicate an out-of-bounds access error.

If an integrity violation does not occur, then corruption is not detected. In this case, at 820, the data D1 to be written to memory is encrypted to produce encrypted data D1 based at least in part on the data key K1 and the data tweak T1. In at least one embodiment, the encryption is performed in the core of the processor. The encryption may be performed using a block cipher (e.g., a tweakable block cipher (e.g., XOR-encrypt-XOR-based tweaked-codebook mode with ciphertext stealing (XTS)), or any other suitable cryptographic algorithm as previously described herein.

At 822, the content of the memory region (e.g., data D0) is replaced with the new encrypted data D1. This can be achieved by performing a write operation to store the encrypted data D1 to memory based on the memory address. The decoded linear address obtained at 804 may be used to obtain a physical address and the encrypted data D1 may be written to the memory region based on the physical address.

It should be noted that, although the operations of process 800 are illustrated in sequence, any suitable order or timing of the various operations may be used. In one possible implementation, deriving the data tweak T1 at 808 and generating a keystream from the data tweak T1 to be used in decrypting the data D0 at 812 can be performed at least partially in parallel with decoding the memory address from the encoded pointer at 804 and/or reading the data D0 from the memory region at 806. In another example, encrypting the data D1 can be performed at least partially in parallel with decrypting data D0 at 812 and/or performing integrity checks at 814-816. These possible alternative implementations, or any suitable combination thereof, may improve efficiency as the process may be completed more quickly.

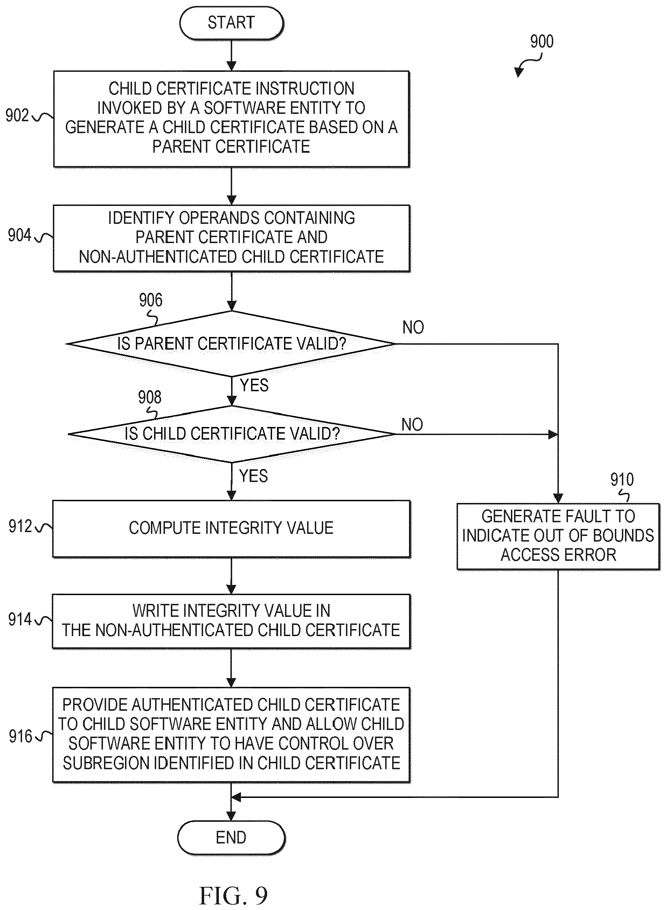

FIGURE 9 is a flow diagram illustrating an example process 900 associated with a child certificate generation instruction according to one or more embodiments. Process 900 may be associated with one or more sets of operations. A computing system (e.g., computing device 100) may comprise means such as hardware, firmware, and/or software of the computing device 100 for performing the operations. In one example, at least some of the operations of the child certificate generation logic 158 may be performed by the processor 102.

For ease of illustration, process 900 is described with reference to a parent certificate generated for a memory region allocated to a software entity, and a child certificate generated for a subregion of that memory region, where the memory region is the root of memory allocated to the software entity. It should be noted, however, that the memory region could also be a subregion of an even larger second memory region, the second memory region could be a subregion of an even larger third memory region, and so on. Generally, any number of subregion levels within a root of memory allocated to a software entity, and certificates corresponding to respective subregions are possible.

Process 900 is executed when a certificate has already been generated for a memory region allocated to a software entity, and the software entity wants to break up or divide the memory region into two or more smaller subregions. At 902, a child certificate generation instruction is executed by the software entity to generate a child certificate for a subregion of a larger first memory region, based on a parent certificate associated with the larger first memory region. Execution of the child certificate generation instruction causes a child certificate generation operation or micro-operation to be issued. The child certificate generation operation or micro-operation is associated with a parent certificate for the larger memory region and a non-authenticated child certificate for one of the two or more smaller subregions contained within the larger memory region. In one example, the parent certificate may be provided in a first operand, and the non-authenticated child certificate may be provided in a second operand.

The non-authenticated child certificate may be generated by the software entity and may include any suitable fields based on particular needs and implementations. For example, the non-authenticated child certificate may include a base address of the subregion, memory region bounds indicating the size of the subregion or object to be stored in the subregion, and any desired additional metadata (e.g., access privileges and/or field types). Additionally, the non-authenticated child certificate may contain an empty integrity value field, which can be populated with an integrity value generated by the processor if the child certificate is determined to be valid. The integrity value written by the processor can also serve as a signature to authenticate the certificate. In other implementations, the processor may use another mechanism or field to authorize the certificate.

At 904, the operands of the child certificate generation instruction containing the parent certificate and the non-authenticated child certificate are identified. At 906, the processor determines whether the parent certificate is valid. This determination may include a verification of an integrity value in the parent certificate as described with reference to process 700 at 706, for example. If the integrity verification fails and the certificate is determined to be invalid, then a fault may be generated at 910 to indicate an out of bounds access error, and an error message may be returned.

If the integrity verification succeeds and the parent certificate is determined to be valid, then at 908, the processor determines whether the non-authenticated child certificate is valid. This determination can be made by comparing the memory bounds value in the non-authenticated child certificate to the memory bounds value in the parent certificate. If the memory bounds indicated in the non-authenticated child certificate are not contained entirely within the memory bounds indicated in the parent certificate, then the non-authenticated child certificate is invalid. Other checks may also be performed. For example, access privileges in the additional metadata field may be evaluated to ensure that the permissions in the child certificate are not greater than the access permissions in the parent certificate. If the access permissions indicated in the non-authenticated child certificate are greater than the access permissions indicated in the parent certificate, then the non-authenticated child certificate may be invalid. If the non-authenticated child certificate is determined to be invalid, then a fault may be generated at 910, and an error message may be returned.

If the non-authenticated child certificate is determined to be valid, however, then at 912, an integrity value can be computed for the non-authenticated child certificate. The integrity value can be computed by applying a cryptographic hash function to one or more other fields (e.g., base address, memory bounds, additional metadata) in the non-authenticated child certificate. At 914, the processor can write the computed integrity value in the integrity field of the non-authenticated child certificate. In one or more embodiments, this integrity value serves as an authentication signature to transform the non-authenticated child certificate into an authenticated child certificate, which authorizes access to the third subregion by a software entity that presents that authenticated child certificate.

At 916, the software entity can receive the authenticated child certificate from the processor and can provide the authenticated child certificate to a child software entity to allow the child software entity to have complete control over the narrower subregion.

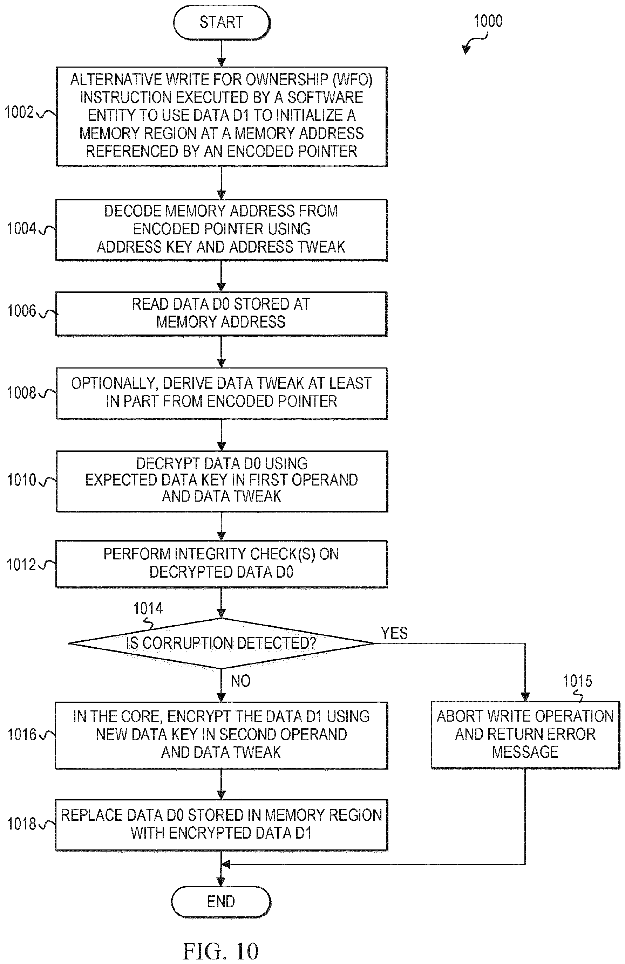

FIGURE 10 is a flow diagram illustrating an example process 1000 associated with another embodiment of a write for ownership (WFO) instruction according to one or more embodiments. Process 1000 may be associated with one or more sets of operations. A computing system (e.g., computing device 100) may comprise means such as hardware, firmware, and/or software of the computing device 100 for performing the operations. In one example, at least some of the operations of another embodiment of the WFO memory store logic 154 may be performed by the processor 102.

Process 1000 begins when some data (e.g., D1) becomes available to be written to memory. At 1002, another embodiment of a WFO instruction (referred to herein as "alternative WFO instruction") is executed by a software entity (e.g., a parent software entity or child software entity) to use data D1 to initialize a memory region at a memory address referenced by an encoded pointer. Execution of the alternative WFO instruction causes an alternative write for ownership memory operation or micro-operation to be issued. The alternative WFO memory operation or micro-operation is associated with an expected data key (e.g., K0), a new data key (e.g., K1), and the memory address (e.g., A1) of the memory region where the data D1 is to be written. In at least one embodiment, the alternative WFO instruction can include a first operand containing the expected data key K0, a second operand containing the new data key K1, and a third operand containing the pointer encoded with the memory address A1 (e.g., a linear address) of the memory region. It should be noted that the operands containing keys could use any suitable technique to provide the key, such as for example, containing a pointer to the key, a data structure containing the key, or a data structure containing a pointer to the key.

The alternative WFO instruction may be advantageous when allocated memory that has already been encrypted with one data key (e.g., expected data key K0) is subsequently divided into subregions and new data keys (e.g., new data key K1, new data key K2, etc.) are assigned to the subregions. Thus, alternative WFO instructions may be used in conjunction with other WFO instructions using certificates during a system boot. For example, a WFO instruction with a certificate may be used during a system boot to initialize a memory region. After the system boot, alternative WFO instructions may be used as needed to initialize subregions (or the main memory region) using different keys. In this scenario, the software entity may initialize the new subregions with the new keys using alternative WFO instructions. Rather than validating a certificate supplied in a WFO write instruction, an alternative WFO instruction reads the content at the memory address referenced by the encoded pointer and performs an integrity check on the content based on the expected data key supplied by an operand of the alternative WFO instruction. Thus, the integrity of the memory region's content can be evaluated to determine whether the content is corrupted or the alternative WFO operation is attempting to perform an out of bounds access. This obviates the need for generating and checking certificates for each newly allocated subregion of a larger memory region or subregion, when the contents of the larger memory region or subregion have already been initialized with encrypted data (or code).

Accordingly, at 1004, the memory address (e.g., linear address) of the memory region is obtained by decoding the encoded pointer. If the pointer is cryptographically encoded, then at least a portion of the pointer may be decrypted using an address key and possibly an address tweak to obtain a decrypted slice of the memory address, which is combined with other plaintext portions of the linear address to produce the full plaintext linear address, as previously described herein.

At 1006, the content of the memory region is read based on the decoded linear address. For ease of illustration, we assume that the memory region contains data D0. In at least some scenarios, the decoded linear address may be used to obtain the physical address of the memory region. The physical address can then be used to access the memory region to read data D0. In other scenarios, if data D0 is currently stored in cache (e.g., 170), then it may be read from the cache.

At 1008, a data tweak T1 may be derived at least in part from the encoded pointer, as previously described herein. For example, the data tweak T1 may be the entire encoded pointer (which may or may not be cryptographically encoded). In another example, the metadata from the encoded pointer and the linear address computed from the encoded pointer may be part of the data tweak T1. In yet other embodiments, external context information may be part of the data tweak T1. In at least some embodiments, the data tweak T1 may be used to differentiate subregions defined within a larger memory region or within a larger memory subregion. In yet other embodiments, a data tweak T1 may not be derived from the encoded pointer. Rather, a simple counter/initialization vector (IV) may be used. In this case, different data keys may be used to differentiate subregions. In yet other embodiments, the combination of different keys for each subregion and different data tweaks derived from the encoded pointers to those subregions may be used to differentiate subregions.

At 1010, the data D0 read from memory is decrypted to produce decrypted data D0 based at least in part on the expected data key K0 obtained from the first operand and the data tweak T1 derived at 1008. The first operand may contain any suitable content (e.g., an encrypted key, a pointer to an encrypted key stored in memory, a pointer to an unencrypted key stored in processor memory, a data structure containing an encrypted key, a data structure containing a pointer to an encrypted key or to an unencrypted key in processor memory, etc.) from which the expected data key K0 can be obtained. In at least one embodiment, the decryption is performed in the core of the processor. The decryption may be performed using a block cipher (e.g., a tweakable block cipher (e.g., XOR-encrypt-XOR-based tweaked-codebook mode with ciphertext stealing (XTS)), or any other suitable cryptographic algorithm as previously described herein.

At 1012, one or more integrity checks are performed to detect corruption, which may occur if the read data D0 was encrypted with a different data key or if the alternative WFO operation is attempting an out of bounds access. Any suitable integrity checking technique may be used such as the integrity checks described with reference to process 800 at 814 (e.g., MAC value, canary value, entropy).

At 1014, a determination is made as to whether an integrity violation occurred in one or more of the integrity checks. If an integrity violation occurs, then corruption is detected and at 1015, the alternative WFO operation may be aborted and an error message may be returned to indicate an out-of-bounds access error.

If an integrity violation does not occur, then corruption is not detected. In this case, at 1016, the data D1 to be written to memory is encrypted to produce encrypted data D1 based at least in part on the new data key K1 obtained from the second operand and the data tweak T1 derived at 1008. The second operand may contain any suitable content (e.g., an encrypted key, a pointer to an encrypted key stored in memory, a pointer to an unencrypted key stored in processor memory, a data structure containing an encrypted key, a data structure containing a pointer to an encrypted key or to an unencrypted key in processor memory, etc.) from which the new data key K1 can be obtained. In at least one embodiment, the encryption is performed in the core of the processor. The encryption may be performed using a block cipher (e.g., a tweakable block cipher (e.g., XOR-encrypt-XOR-based tweaked-codebook mode with ciphertext stealing (XTS)), or any other suitable cryptographic algorithm as previously described herein.

At 1018, the content (e.g., data D0) of the memory region is replaced with the new encrypted data D1. This can be achieved by performing a write operation to store the encrypted data D1 to memory based on the memory address. The decoded linear address obtained at 1004 may be used to obtain a physical address and the encrypted data D1 may be written to the memory region based on the physical address.

It should be noted that, although the operations of process 1000 are illustrated in sequence, any suitable order or timing of the various operations may be used. In one possible implementation, deriving the data tweak T1 at 1008 and generating a keystream from the data tweak T1 to be used in decrypting the data D0 at 1010 can be performed at least partially in parallel with decoding the memory address from the encoded pointer at 1004 and/or reading the data D0 from the memory region at 1006. In another example, encrypting the data D1 can be performed at least partially in parallel with decrypting data D0 at 1010 and/or performing integrity checks at 1012-1014. These possible alternative implementations, or any suitable combination thereof, may improve efficiency as the process may be completed more quickly.

### Example Architectures

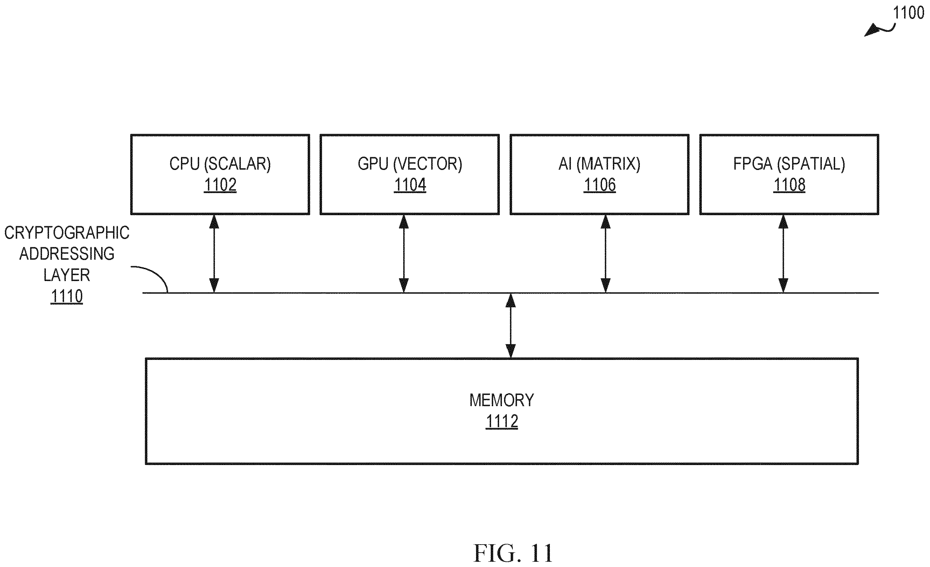

FIGURE 11 is a block diagram illustrating an example cryptographic computing environment 1100 according to at least one embodiment. In the example shown, a cryptographic addressing layer 1110 extends across the example compute vectors central processing unit (CPU) 1102, graphical processing unit (GPU) 1104, artificial intelligence (Al) 1106, and field programmable gate array (FPGA) 1108. For example, the CPU 1102 and GPU 1104 may share the same virtual address translation for data stored in memory 1112, and the cryptographic addresses may build on this shared virtual memory. They may share the same process key for a given execution flow, and compute the same tweaks to decrypt the cryptographically encoded addresses and decrypt the data referenced by such encoded addresses, following the same cryptographic algorithms.

Combined, the capabilities described herein may enable cryptographic computing. Memory 1112 may be encrypted at every level of the memory hierarchy, from the first level of cache through last level of cache and into the system memory. Binding the cryptographic address encoding to the data encryption may allow extremely fine-grain object boundaries and access control, enabling fine grain secure containers down to even individual functions and their objects for function-as-a-service. Cryptographically encoding return addresses on a call stack (depending on their location) may also enable control flow integrity without the need for shadow stack metadata. Thus, any of data access control policy and control flow can be performed cryptographically, simply dependent on cryptographic addressing and the respective cryptographic data bindings.

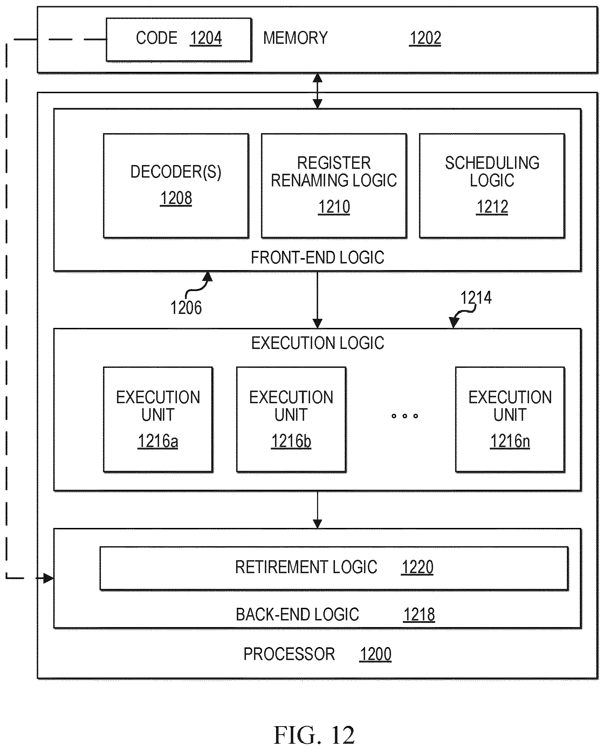

FIGURES 12-14 are block diagrams of exemplary computer architectures that may be used in accordance with embodiments disclosed herein. Generally, any computer architecture designs known in the art for processors and computing systems may be used. In an example, system designs and configurations known in the arts for laptops, desktops, handheld PCs, personal digital assistants, tablets, engineering workstations, servers, network devices, servers, appliances, network hubs, routers, switches, embedded processors, digital signal processors (DSPs), graphics devices, video game devices, set-top boxes, micro controllers, smart phones, mobile devices, wearable electronic devices, portable media players, hand held devices, and various other electronic devices, are also suitable for embodiments of computing systems described herein. Generally, suitable computer architectures for embodiments disclosed herein can include, but are not limited to, configurations illustrated in FIGURES 12-14.

FIGURE 12 is an example illustration of a processor according to an embodiment. Processor 1200 is an example of a type of hardware device that can be used in connection with the implementations shown and described herein (e.g., processor 102). Processor 1200 may be any type of processor, such as a microprocessor, an embedded processor, a digital signal processor (DSP), a network processor, a multi-core processor, a single core processor, or other device to execute code. Although only one processor 1200 is illustrated in FIGURE 12, a processing element may alternatively include more than one of processor 1200 illustrated in FIGURE 12. Processor 1200 may be a single-threaded core or, for at least one embodiment, the processor 1200 may be multi-threaded in that it may include more than one hardware thread context (or "logical processor") per core.

FIGURE 12 also illustrates a memory 1202 coupled to processor 1200 in accordance with an embodiment. Memory 1202 may be any of a wide variety of memories (including various layers of memory hierarchy) as are known or otherwise available to those of skill in the art. Such memory elements can include, but are not limited to, random access memory (RAM), read only memory (ROM), logic blocks of a field programmable gate array (FPGA), erasable programmable read only memory (EPROM), and electrically erasable programmable ROM (EEPROM).

Processor 1200 can execute any type of instructions associated with algorithms, processes, or operations detailed herein. Generally, processor 1200 can transform an element or an article (e.g., data) from one state or thing to another state or thing.

Code 1204, which may be one or more instructions to be executed by processor 1200, may be stored in memory 1202, or may be stored in software, hardware, firmware, or any suitable combination thereof, or in any other internal or external component, device, element, or object where appropriate and based on particular needs. In one example, processor 1200 can follow a program sequence of instructions indicated by code 1204. Each instruction enters a front-end logic 1206 and is processed by one or more decoders 1208. The decoder may generate, as its output, a micro operation such as a fixed width micro operation in a predefined format, or may generate other instructions, microinstructions, or control signals that reflect the original code instruction. Front-end logic 1206 also includes register renaming logic 1210 and scheduling logic 1212, which generally allocate resources and queue the operation corresponding to the instruction for execution.

Processor 1200 can also include execution logic 1214 having a set of execution units 1216a, 1216b, 1216n, etc. Some embodiments may include a number of execution units dedicated to specific functions or sets of functions. Other embodiments may include only one execution unit or one execution unit that can perform a particular function. Execution logic 1214 performs the operations specified by code instructions.

After completion of execution of the operations specified by the code instructions, back-end logic 1218 can retire the instructions of code 1204. In one embodiment, processor 1200 allows out of order execution but requires in order retirement of instructions. Retirement logic 1220 may take a variety of known forms (e.g., re-order buffers or the like). In this manner, processor 1200 is transformed during execution of code 1204, at least in terms of the output generated by the decoder, hardware registers and tables utilized by register renaming logic 1210, and any registers (not shown) modified by execution logic 1214.

Although not shown in FIGURE 12, a processing element may include other elements on a chip with processor 1200. For example, a processing element may include memory control logic along with processor 1200. The processing element may include I/O control logic and/or may include I/O control logic integrated with memory control logic. The processing element may also include one or more caches. In some embodiments, non-volatile memory (such as flash memory or fuses) may also be included on the chip with processor 1200.

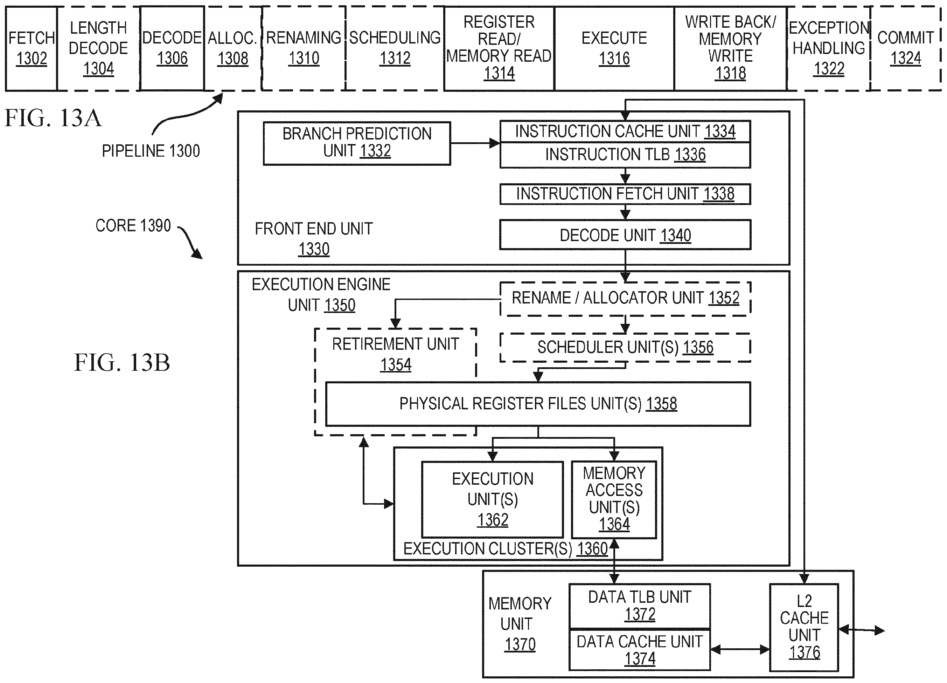

FIGURE 13A is a block diagram illustrating both an exemplary in-order pipeline and an exemplary register renaming, out-of-order issue/execution pipeline according to one or more embodiments of this disclosure. FIGURE 13B is a block diagram illustrating both an exemplary embodiment of an in-order architecture core and an exemplary register renaming, out-of-order issue/execution architecture core to be included in a processor according to one or more embodiments of this disclosure. The solid lined boxes in FIGURES 13A-13B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIGURE 13A, a processor pipeline 1300 includes a fetch stage 1302, a length decode stage 1304, a decode stage 1306, an allocation stage 1308, a renaming stage 1310, a scheduling (also known as a dispatch or issue) stage 1312, a register read/memory read stage 1314, an execute stage 1316, a write back/memory write stage 1318, an exception handling stage 1322, and a commit stage 1324.

FIGURE 13B shows processor core 1390 including a front end unit 1330 coupled to an execution engine unit 1350, and both are coupled to a memory unit 1370. Processor core 1390 and memory unit 1370 are examples of the types of hardware that can be used in connection with the implementations shown and described herein (e.g., processor 102, memory 120). The core 1390 may be a reduced instruction set computing (RISC) core, a complex instruction set computing (CISC) core, a very long instruction word (VLIW) core, or a hybrid or alternative core type. As yet another option, the core 1390 may be a special-purpose core, such as, for example, a network or communication core, compression engine, coprocessor core, general purpose computing graphics processing unit (GPGPU) core, graphics core, or the like. In addition, processor core 1390 and its components represent example architecture that could be used to implement logical processors and their respective components.

The front end unit 1330 includes a branch prediction unit 1332 coupled to an instruction cache unit 1334, which is coupled to an instruction translation lookaside buffer (TLB) unit 1336, which is coupled to an instruction fetch unit 1338, which is coupled to a decode unit 1340. The decode unit 1340 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1390 includes a microcode ROM or other medium that stores microcode for certain macroinstructions (e.g., in decode unit 1340 or otherwise within the front end unit 1330). The decode unit 1340 is coupled to a rename/allocator unit 1352 in the execution engine unit 1350.

The execution engine unit 1350 includes the rename/allocator unit 1352 coupled to a retirement unit 1354 and a set of one or more scheduler unit(s) 1356. The scheduler unit(s) 1356 represents any number of different schedulers, including reservations stations, central instruction window, etc. The scheduler unit(s) 1356 is coupled to the physical register file(s) unit(s) 1358. Each of the physical register file(s) units 1358 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1358 comprises a vector registers unit, a write mask registers unit, and a scalar registers unit. These register units may provide architectural vector registers, vector mask registers, and general purpose registers (GPRs). In at least some embodiments described herein, register units 1358 are examples of the types of hardware that can be used in connection with the implementations shown and described herein (e.g., registers 110). The physical register file(s) unit(s) 1358 is overlapped by the retirement unit 1354 to illustrate various ways in which register renaming and out-of-order execution may be implemented (e.g., using a reorder buffer(s) and a retirement register file(s); using a future file(s), a history buffer(s), and a retirement register file(s); using register maps and a pool of registers; etc.). The retirement unit 1354 and the physical register file(s) unit(s) 1358 are coupled to the execution cluster(s) 1360. The execution cluster(s) 1360 includes a set of one or more execution units 1362 and a set of one or more memory access units 1364. The execution units 1362 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. Execution units 1362 may also include an address generation unit to calculate addresses used by the core to access main memory (e.g., memory unit 1370) and a page miss handler (PMH).

The scheduler unit(s) 1356, physical register file(s) unit(s) 1358, and execution cluster(s) 1360 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1364). It should also be understood that where separate pipelines are used, one or more of these pipelines may be out-of-order issue/execution and the rest in-order.

The set of memory access units 1364 is coupled to the memory unit 1370, which includes a data TLB unit 1372 coupled to a data cache unit 1374 coupled to a level 2 (L2) cache unit 1376. In one exemplary embodiment, the memory access units 1364 may include a load unit, a store address unit, and a store data unit, each of which is coupled to the data TLB unit 1372 in the memory unit 1370. The instruction cache unit 1334 is further coupled to a level 2 (L2) cache unit 1376 in the memory unit 1370. The L2 cache unit 1376 is coupled to one or more other levels of cache and eventually to a main memory. In addition, a page miss handler may also be included in core 1390 to look up an address mapping in a page table if no match is found in the data TLB unit 1372.

By way of example, the exemplary register renaming, out-of-order issue/execution core architecture may implement the pipeline 1300 as follows: 1) the instruction fetch unit 1338 performs the fetch and length decoding stages 1302 and 1304; 2) the decode unit 1340 performs the decode stage 1306; 3) the rename/allocator unit 1352 performs the allocation stage 1308 and renaming stage 1310; 4) the scheduler unit(s) 1356 performs the scheduling stage 1312; 5) the physical register file(s) unit(s) 1358 and the memory unit 1370 perform the register read/memory read stage 1314; the execution cluster 1360 perform the execute stage 1316; 6) the memory unit 1370 and the physical register file(s) unit(s) 1358 perform the write back/memory write stage 1318; 7) various units may be involved in the exception handling stage 1322; and 8) the retirement unit 1354 and the physical register file(s) unit(s) 1358 perform the commit stage 1324.

The core 1390 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1390 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology). Accordingly, in at least some embodiments, multi-threaded enclaves may be supported.

While register renaming is described in the context of out-of-order execution, it should be understood that register renaming may be used in an in-order architecture. While the illustrated embodiment of the processor also includes separate instruction and data cache units 1334/1374 and a shared L2 cache unit 1376, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

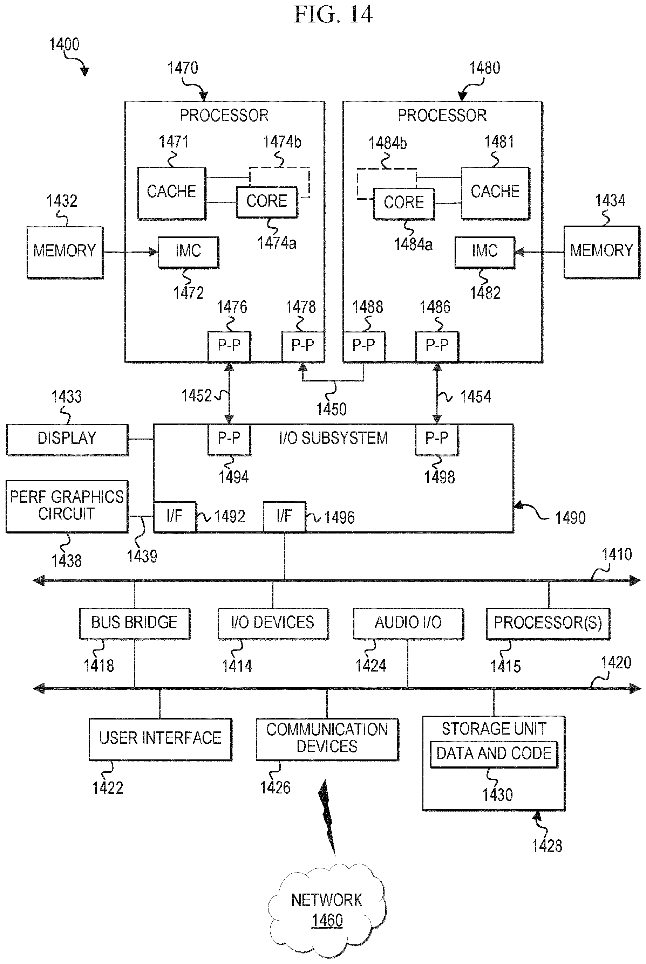

FIGURE 14 illustrates a computing system 1400 that is arranged in a point-to-point (PtP) configuration according to an embodiment. In particular, FIGURE 14 shows a system where processors, memory, and input/output devices are interconnected by a number of point-to-point interfaces. Generally, one or more of the computing systems or computing devices described herein (e.g., computing device 100) may be configured in the same or similar manner as computing system 1400.

Processors 1470 and 1480 may be implemented as single core processors 1474a and 1484a or multi-core processors 1474a-1474b and 1484a-1484b. Processors 1470 and 1480 may each include a cache 1471 and 1481 used by their respective core or cores. A shared cache (not shown) may be included in either processors or outside of both processors, yet connected with the processors via P-P interconnect, such that either or both processors' local cache information may be stored in the shared cache if a processor is placed into a low power mode. It should be noted that one or more embodiments described herein could be implemented in a computing system, such as computing system 1400. Moreover, processors 1470 and 1480 are examples of the types of hardware that can be used in connection with the implementations shown and described herein (e.g., processor 102).

Processors 1470 and 1480 may also each include integrated memory controller logic (IMC) 1472 and 1482 to communicate with memory elements 1432 and 1434, which may be portions of main memory locally attached to the respective processors. In alternative embodiments, memory controller logic 1472 and 1482 may be discrete logic separate from processors 1470 and 1480. Memory elements 1432 and/or 1434 may store various data to be used by processors 1470 and 1480 in achieving operations and functionality outlined herein.

Processors 1470 and 1480 may be any type of processor, such as those discussed in connection with other figures. Processors 1470 and 1480 may exchange data via a point-to-point (PtP) interface 1450 using point-to-point interface circuits 1478 and 1488, respectively. Processors 1470 and 1480 may each exchange data with an input/output (I/O) subsystem 1490 via individual point-to-point interfaces 1452 and 1454 using point-to-point interface circuits 1476, 1486, 1494, and 1498. I/O subsystem 1490 may also exchange data with a high-performance graphics circuit 1438 via a high-performance graphics interface 1439, using an interface circuit 1492, which could be a PtP interface circuit. In one embodiment, the high-performance graphics circuit 1438 is a special-purpose processor, such as, for example, a high-throughput MIC processor, a network or communication processor, compression engine, graphics processor, GPGPU, embedded processor, or the like. I/O subsystem 1490 may also communicate with a display 1433 for displaying data that is viewable by a human user. In alternative embodiments, any or all of the PtP links illustrated in FIGURE 14 could be implemented as a multi-drop bus rather than a PtP link.

I/O subsystem 1490 may be in communication with a bus 1410 via an interface circuit 1496. Bus 1410 may have one or more devices that communicate over it, such as a bus bridge 1418, I/O devices 1414, and one or more other processors 1415. Via a bus 1420, bus bridge 1418 may be in communication with other devices such as a user interface 1422 (such as a keyboard, mouse, touchscreen, or other input devices), communication devices 1426 (such as modems, network interface devices, or other types of communication devices that may communicate through a computer network 1460), audio I/O devices 1424, and/or a storage unit 1428. Storage unit 1428 may store data and code 1430, which may be executed by processors 1470 and/or 1480. In alternative embodiments, any portions of the bus architectures could be implemented with one or more PtP links.

Program code, such as code 1430, may be applied to input instructions to perform the functions described herein and generate output information. The output information may be applied to one or more output devices, in known fashion. For purposes of this application, a processing system may be part of computing system 1400 and includes any system that has a processor, such as, for example; a digital signal processor (DSP), a microcontroller, an application specific integrated circuit (ASIC), or a microprocessor.

The program code (e.g., 1430) may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine readable medium which represents various logic within the processor, which when read by a machine causes the machine to fabricate logic to perform the one or more of the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the present disclosure also include non-transitory, tangible machine readable media containing instructions or containing design data, such as Hardware Description Language (HDL), which defines structures, circuits, apparatuses, processors and/or system features described herein. Such embodiments may also be referred to as program products.

The computing system depicted in FIGURE 14 is a schematic illustration of an embodiment of a computing system that may be utilized to implement various embodiments discussed herein. It will be appreciated that various components of the system depicted in FIGURE 14 may be combined in a system-on-a-chip (SoC) architecture or in any other suitable configuration capable of achieving the functionality and features of examples and implementations provided herein.

Although this disclosure has been described in terms of certain implementations and generally associated methods, alterations and permutations of these implementations and methods will be apparent to those skilled in the art. For example, the actions described herein can be performed in a different order than as described and still achieve the desirable results. As one example, the processes depicted in the accompanying figures do not necessarily require the particular order shown, or sequential order, to achieve the desired results. In certain implementations, multitasking and parallel processing may be advantageous. Other variations are within the scope of the following claims.

The architectures presented herein are provided by way of example only, and are intended to be non-exclusive and non-limiting. Furthermore, the various parts disclosed are intended to be logical divisions only, and need not necessarily represent physically separate hardware and/or software components. Certain computing systems may provide memory elements in a single physical memory device, and in other cases, memory elements may be functionally distributed across many physical devices. In the case of virtual machine managers or hypervisors, all or part of a function may be provided in the form of software or firmware running over a virtualization layer to provide the disclosed logical function.

Note that with the examples provided herein, interaction may be described in terms of a single computing system. However, this has been done for purposes of clarity and example only. In certain cases, it may be easier to describe one or more of the functionalities of a given set of flows by only referencing a single computing system. Moreover, the system for deep learning and malware detection is readily scalable and can be implemented across a large number of components (e.g., multiple computing systems), as well as more complicated/sophisticated arrangements and configurations. Accordingly, the examples provided should not limit the scope or inhibit the broad teachings of the computing system as potentially applied to a myriad of other architectures.

As used herein, unless expressly stated to the contrary, use of the phrase'at least one of' refers to any combination of the named items, elements, conditions, or activities. For example, 'at least one of X, Y, and Z' is intended to mean any of the following: 1) at least one X, but not Y and not Z; 2) at least one Y, but not X and not Z; 3) at least one Z, but not X and not Y; 4) at least one X and at least one Y, but not Z; 5) at least one X and at least one Z, but not Y; 6) at least one Y and at least one Z, but not X; or 7) at least one X, at least one Y, and at least one Z.

Additionally, unless expressly stated to the contrary, the terms 'first', 'second', 'third', etc., are intended to distinguish the particular nouns (e.g., element, condition, module, activity, operation, claim element, etc.) they modify, but are not intended to indicate any type of order, rank, importance, temporal sequence, or hierarchy of the modified noun. For example, 'first X' and 'second X' are intended to designate two separate X elements that are not necessarily limited by any order, rank, importance, temporal sequence, or hierarchy of the two elements.

References in the specification to "one embodiment," "an embodiment," "some embodiments," etc., indicate that the embodiment(s) described may include a particular feature, structure, or characteristic, but every embodiment may or may not necessarily include that particular feature, structure, or characteristic. Moreover, such phrases are not necessarily referring to the same embodiment.

While this specification contains many specific implementation details, these should not be construed as limitations on the scope of any embodiments or of what may be claimed, but rather as descriptions of features specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, the separation of various system components and modules in the embodiments described above should not be understood as requiring such separation in all embodiments. It should be understood that the described program components, modules, and systems can generally be integrated together in a single software product or packaged into multiple software products.

Thus, particular embodiments of the subject matter have been described. Other embodiments are within the scope of this disclosure. Numerous other changes, substitutions, variations, alterations, and modifications may be ascertained to one skilled in the art and it is intended that the present disclosure encompass all such changes, substitutions, variations, alterations, and modifications as falling within the scope of the appended claims.

### OTHER NOTES AND EXAMPLES

The following examples pertain to embodiments in accordance with this specification. The system, apparatus, method, and machine readable medium embodiments can include one or a combination of the following examples:
Example A1 provides an apparatus, a system, a processor, a machine readable medium, a method, and/or hardware-, firmware-, and/or software-based logic, where the Example A1 comprises a core comprising circuitry to execute a first instruction of a first software entity, the first instruction including a first operand comprising a first certificate and a second operand indicating a first memory region in memory, where the circuitry is to execute the first instruction to: compute encrypted first data based, at least in part, on a cryptographic algorithm and a first data parameter; determine whether the first certificate authorizes the first software entity to access the first memory region of the memory; and based on determining the first certificate in the first operand authorizes the first software entity to access the first memory region, perform a first write operation to store the encrypted first data in the first memory region.
In Example A2, the subject matter of Example A1 can optionally include where the first write operation is to be performed without performing a preceding read operation on the first memory region.
In Example A3, the subject matter of any one of Examples A1-A2 can optionally include where the circuitry is further to obtain a first memory address of the first memory region by decoding a first encoded pointer in the second operand of the first instruction based, at least in part, on an address parameter.
In Example A4, the subject matter of any one of Examples A1-A3 can optionally include where the first memory region is a first subregion of two or more subregions defined within a larger memory region.
In Example A5, the subject matter of Example A4 can optionally include where the circuitry is further to execute a second instruction of the first software entity, the second instruction including a third operand comprising the first certificate and a fourth operand indicating a second subregion of the two or more subregions, where the circuitry is to execute the second instruction to: compute encrypted second data based, at least in part, on the cryptographic algorithm and a second data parameter; and based on determining the first certificate in the third operand authorizes the first software entity to access the second subregion, perform a second write operation to store the encrypted second data in the second subregion.
In Example A6, the subject matter of any one of Examples A4-A5 can optionally include where the circuitry is further to execute a third instruction including a fifth operand comprising a second certificate that authorizes access to the larger memory region, where the circuitry is to execute the third instruction to: responsive to determining that the second certificate is valid and that a non-authenticated child certificate indicates a third subregion is defined within the larger memory region indicated in the second certificate: transform the non-authenticated child certificate into an authenticated child certificate for access to the third subregion; and provide the authenticated child certificate to the first software entity, where the first software entity is to provide the authenticated child certificate to a child software entity of the first software entity.
In Example A7, the subject matter of Example A6 can optionally include where the determining that the second certificate is valid is to include verifying integrity of the second certificate.
In Example A8, the subject matter of any one of Examples A6-A7 can optionally include where transforming the non-authenticated child certificate into an authenticated child certificate for access to the third subregion is to include computing an integrity value based on at least one of a plurality of fields in the non-authenticated child certificate, and storing the integrity value in the non-authenticated child certificate.
In Example A9, the subject matter of any one of Examples A6-A8 can optionally include where the circuitry is to execute a fourth instruction of the child software entity presenting the authenticated child certificate to perform a third write operation to store encrypted third data in the third subregion without a preceding read operation of the third subregion.
In Example A10, the subject matter of any one of Examples A1-A9 can optionally include where the first certificate comprises a plurality of fields including a first field containing a base address of the first memory region, a second field containing memory region bounds indicating a size of the first memory region, and an integrity value of the first certificate, where the integrity value is generated based on at least one other field of the plurality of fields.
In Example A11, the subject matter of any one of Examples A1-A10 can optionally include where the circuitry is further to generate the first certificate for the first memory region, where the first certificate includes a first signature, and authorize the first software entity to use the first memory region by providing the first certificate to the first software entity.
In Example A12, the subject matter of any one of Examples A1-A11 can optionally include where the determining that the first certificate authorizes the first software entity to access the first memory region is based on verifying integrity of the first certificate.
In Example A13, the subject matter of any one of Examples A1-A12 can optionally include where the circuitry is further to, subsequent to an execution of the first instruction, execute a fifth instruction of the first software entity to: prior to performing a fourth write operation to the first memory region, perform a read operation for stored data in the first memory region; compute decrypted data from the stored data based, at least in part, on the cryptographic algorithm and the first data parameter; and based on determining the decrypted data is corrupted, prevent the fourth write operation to the first memory region.
In Example A14, the subject matter of Example A13 can optionally include where the circuitry is further to perform an integrity check to determine whether the decrypted data is corrupted, where the integrity check includes at least one of: computing a message authentication code based on the decrypted data and comparing the computed message authentication code with a previously-stored message authentication code; identifying a canary value in the decrypted data and determining whether the canary value matches an expected value; and identifying an entropy of the decrypted data and comparing the entropy of the decrypted data to a threshold entropy.
Example B1 provides an apparatus, a system, a processor, a machine readable medium, a method, and/or hardware-, firmware-, and/or software-based logic, where the Example B1 comprises a core comprising circuitry to execute a first instruction of a software entity, the first instruction including a first expected key in a first operand, a first new key in a second operand, and a third operand comprising a first encoded pointer to a first memory address of a first memory region in memory, where the circuitry is to execute the first instruction to: perform a first read operation for first stored data at the first memory address of the first memory region; compute first decrypted data from the first stored data based, at least in part, on a cryptographic algorithm and the first expected key; compute first encrypted data from first unencrypted data based, at least in part, on the cryptographic algorithm and the first new key; and based on determining the first decrypted data is not corrupted, replace the first stored data with the first encrypted data.
In Example B2, the subject matter of Example B1 can optionally include where the circuitry is further to perform an integrity check to determine whether the first decrypted data is corrupted, where the integrity check includes at least one of: computing a message authentication code based on the first decrypted data and comparing the computed message authentication code with a previously-stored message authentication code; identifying a canary value in the first decrypted data and determining whether the canary value matches an expected value; and identifying an entropy of the first decrypted data and comparing the entropy of the first decrypted data to a threshold entropy.
In Example B3, the subject matter of any one of Examples B1-B2 can optionally include where the first decrypted data is to be computed from the first stored data based, in part, on a first tweak derived from the first encoded pointer, and where the first encrypted data is to be computed from the first unencrypted data based, in part, on the first tweak derived from the first encoded pointer.
In Example B4, the subject matter of any one of Examples B1-B3 can optionally include where the first memory region is a first subregion of two or more subregions defined within a larger memory region.
In Example B5, the subject matter of Example B4 can optionally include where the circuitry is further to execute a second instruction of the software entity prior to executing the first instruction of the software entity, the second instruction including a fourth operand comprising a certificate and a fifth operand indicating the larger memory region, wherein the circuitry is to execute the second instruction to: compute second encrypted data based, at least in part, on the cryptographic algorithm and a second data parameter; determine whether the certificate authorizes the software entity to access the larger memory region; and based on determining the certificate authorizes the software entity to access the larger memory region, store the second encrypted data in the larger memory region.
In Example B6, the subject matter of Example B5 can optionally include where the certificate comprises a plurality of fields including a first field containing a base address of the larger memory region, a second field containing memory region bounds indicating a size of the larger memory region, and an integrity value of the certificate, wherein the integrity value is generated based on at least one other field of the plurality of fields.
In Example B7, the subject matter of any one of Examples B1-B6 can optionally include where the first unencrypted data is either equivalent to the first decrypted data or different than the first decrypted data.
In Example B8, the subject matter of any one of Examples B1-B7 can optionally include where the circuitry is further to obtain the first memory address of the first memory region by decoding the first encoded pointer in the third operand of the first instruction.
In Example B9, the subject matter of any one of Examples B1-B8 can optionally include where the circuitry is further to, subsequent to an execution of the first instruction, execute a third instruction of the software entity to: prior to storing third encrypted data at the first memory address, perform a second read operation for third stored data at the first memory address; compute third decrypted data from the third stored data based, at least in part, on the cryptographic algorithm and the first new key; and based on determining the third decrypted data is not corrupted, replace the third stored data with the third encrypted data.
Example C1 provides an apparatus, a system, a processor, a machine readable medium, a method, and/or hardware-, firmware-, and/or software-based logic, where the Example C1 comprises a memory comprising a memory region, and a processor to: execute a first instruction of a first software entity, the first instruction including a first operand indicating the memory region, wherein the processor is to execute the first instruction to compute encrypted first data from unencrypted first data based, at least in part, on a cryptographic algorithm and a first data parameter and to perform a first write operation to store the encrypted first data in the memory region without performing a preceding read operation on the memory region; and subsequent to executing the first instruction, execute a second instruction of the first software entity, wherein the processor is to execute the second instruction to: prior to performing a second write operation to the memory region, perform a first read operation for stored first data in the memory region; computing decrypted first data from the stored first data based, at least in part, on the cryptographic algorithm and the first data parameter; and based on determining the decrypted first data is not corrupted, perform the second write operation to store encrypted second data in the memory region.
In Example C2, the subject matter of Example C1 can optionally include where the processor is to execute the first instruction further to determine whether a certificate in a second operand of the first instruction authorizes the first software entity to access the memory region of the memory, where the first write operation is to be performed based on determining that the certificate in the second operand authorizes the first software entity to access the memory region.
In Example C3, the subject matter of any one of Examples C1-C2 can optionally include where the processor is to execute a third instruction of the software entity, the third instruction including the first data parameter in a third operand, a new data parameter in a fourth operand, and a fifth operand comprising an encoded pointer to a memory address of the memory region, where the processor is to execute the third instruction to: perform a second read operation for stored second data at the memory address of the memory region; compute decrypted second data from the stored second data based, at least in part, on the cryptographic algorithm and the first data parameter; compute encrypted new data from unencrypted new data based, at least in part, on the cryptographic algorithm and the new data parameter; and based on determining the decrypted second data is not corrupted, perform a third write operation to replace the stored second data with the encrypted new data.
In Example C4, the subject matter of any one of A1-A14, B1-B9, or C1-C3 can optionally include where the first software entity is one of a trusted execution environment, a virtual machine, an operating system, a system application, or a user space application.
An Example Y1 provides an apparatus, the apparatus comprising means for performing the method of any one of the Examples A1-A14, B1-B9, and C1-C4.
In Example Y2, the subject matter of Example Y1 can optionally include that the means for performing the method comprises at least one processor and at least one memory element.
In Example Y3, the subject matter of Example Y2 can optionally where the at least one memory element comprises machine readable instructions that when executed, cause the apparatus to perform the method of any one of Examples A1-A14, B1-B9, and C1-C4.
In Example Y4, the subject matter of any one of Examples Y1-Y3 can optionally include that the apparatus is one of a computing system or a system-on-a-chip.
An Example X1 provides at least one machine readable storage medium comprising instructions, where the instructions when executed realize an apparatus, realize a system, or implement a method in any one of the preceding Examples A1-A14, B1-B9, and C1-C4.

## Claims

1. A method, comprising:
executing, by a processor, a first instruction of a first software entity, wherein the executing the first instruction comprises to:
computing encrypted first data based, at least in part, on a cryptographic algorithm and a first data parameter; and
performing a first write operation to store the encrypted first data in a first memory region of a memory without performing a preceding read operation on the first memory region; and
executing, by the processor, a second instruction of the first software entity, wherein the executing the second instruction comprises:
prior to performing a second write operation to the first memory region, performing a first read operation for stored first data in the first memory region;
computing decrypted first data from the stored first data based, at least in part, on the cryptographic algorithm and the first data parameter; and
based on determining the decrypted first data is not corrupted, performing the second write operation to store encrypted second data in the first memory region.

2. The processor of Claim 1, wherein the first instruction includes a first operand indicating the first memory region and a second operand containing a first certificate, wherein the executing the first instruction further comprises:
determining whether the first certificate authorizes the first software entity to access the first memory region of the memory, wherein the first write operation is performed based on determining that the first certificate in the second operand authorizes the first software entity to access the first memory region.

3. The method of Claim 2, wherein the first memory region is a first subregion of two or more subregions defined within a larger memory region.

4. The method of Claim 3, further comprising executing a third instruction of the first software entity, the third instruction including a third operand comprising the first certificate and a fourth operand indicating a second subregion of the two or more subregions, wherein the executing the third instruction comprises:
computing encrypted third data based, at least in part, on the cryptographic algorithm and a second data parameter; and
based on determining the first certificate in the third operand authorizes the first software entity to access the second subregion, performing a third write operation to store the encrypted third data in the second subregion.

5. The method of any one of Claims 3-4, further comprising executing a fourth instruction including a fifth operand comprising a second certificate that authorizes access to the larger memory region, wherein the executing the fourth instruction comprises:
responsive to determining that the second certificate is valid and that a non-authenticated child certificate indicates a third subregion defined within the larger memory region indicated in the second certificate:
transforming the non-authenticated child certificate into an authenticated child certificate for access to the third subregion; and
providing the authenticated child certificate to the first software entity, wherein the first software entity provides the authenticated child certificate to a child software entity of the first software entity.

6. The method of Claim 5, further comprising executing a fifth instruction of the child software entity presenting the authenticated child certificate, wherein the executing the fifth instruction comprises performing a fourth write operation to store encrypted fourth data in the third subregion without a preceding read operation of the third subregion.

7. The method of any one of Claims 5-6, wherein the transforming the non-authenticated child certificate into an authenticated child certificate for access to the third subregion includes:
computing an integrity value based on at least one of a plurality of fields in the non-authenticated child certificate; and
storing the integrity value in the non-authenticated child certificate.

8. The method of any one of Claims 2-7, wherein the first certificate comprises a plurality of fields including a first field containing a base address of the first memory region, a second field containing memory region bounds indicating a size of the first memory region, and an integrity value of the first certificate, wherein the integrity value is generated based on at least one other field of the plurality of fields.

9. The method of any one of Claims 2-8, wherein the determining that the first certificate authorizes the first software entity to access the first memory region is based on:
verifying integrity of the first certificate.

10. The method of any one of Claims 1-9, further comprising performing an integrity check to determine whether the decrypted first data is corrupted, wherein the integrity check includes at least one of:
computing a message authentication code based on the decrypted first data and comparing the message authentication code with a previously-stored message authentication code;
identifying a canary value in the decrypted first data and determining whether the canary value matches an expected value; or
identifying an entropy of the decrypted first data and comparing the entropy of the decrypted first data to a threshold entropy.

11. The method of any one of Claims 1-10, wherein the executing the second instruction further comprises:
computing the encrypted second data from unencrypted new data based, at least in part, on the cryptographic algorithm and the first data parameter.

12. The method of any one of Claims 1-3, wherein the second instruction of the first software entity includes a sixth operand containing an encoded pointer to a memory address of the first memory region, a seventh operand containing the first data parameter, and an eighth operand containing a new data parameter, wherein the executing the second instruction further comprises:
computing the encrypted second data from unencrypted new data based, at least in part, on the cryptographic algorithm and the new data parameter in the eighth operand.

13. The method of any one of Claims 1-12,
wherein the first software entity is one of a trusted execution environment, a virtual machine, an operating system, a system application, or a user space application, and
wherein the first data parameter is a key or a tweak that is derived at least in part from an encoded pointer to the first memory region.

14. An apparatus, the apparatus comprising means for performing the method of any one of Claims 1-13.

15. At least one machine readable storage medium comprising instructions, wherein the instructions, when executed, implement a method or realize an apparatus as claimed in any one of Claims 1-14.
